(19) Europäisches Patentamt
European Patent Office
Office européen des brevets

(11) **EP 3 367 586 A1**

(12) **EUROPEAN PATENT APPLICATION**

(43) Date of publication:
**29.08.2018 Bulletin 2018/35**

(21) Application number: **18166244.6**

(22) Date of filing: **15.03.2013**

(51) Int Cl.:
*H04B 7/0452* (2017.01)          *H04B 7/06* (2006.01)
*H04B 17/12* (2015.01)          *H04W 52/36* (2009.01)
*H04W 52/14* (2009.01)          *H04B 7/0404* (2017.01)
*H04W 56/00* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.05.2012 US 201261644872 P**

(62) Document number(s) of the earlier application(s) in
accordance with Art. 76 EPC:
**13714426.7 / 2 853 036**

(71) Applicant: **Interdigital Patent Holdings, Inc.
Wilmington, DE 19809-3727 (US)**

(72) Inventors:
• **WANG, Xiaofei
Cedar Grove, New Jersey 07009 (US)**
• **LOU, Hanqing
South Melville, New York 11747 (US)**
• **SHAH, Nirav B.
San Diego, California 92131 (US)**
• **ZHANG, Guodong
Syosset, New York 11791 (US)**
• **GHOSH, Monisha
Chicago, Illinios 60615 (US)**
• **LA SITA, Frank
Setauket, New York 11733 (US)**

(74) Representative: **AWA Sweden AB
P.O. Box 45086
104 30 Stockholm (SE)**

Remarks:
This application was filed on 09-04-2018 as a divisional application to the application mentioned under INID code 62.

(54) **MULTI-USER MULTIPLE INPUT MULTIPLE OUTPUT COMMUNICATIONS IN WIRELESS LOCAL AREA NETWORKS AND WIRELESS TRANSMIT AND RECEIVE UNITS**

(57) Access points (APs) and methods thereon are disclosed. A method implemented in a wireless access point (AP), the method comprising:
receiving, via a multiple user-multiple input multiple output (MU-MIMO) channel, a first LTF sequence from a first wireless transmit/receive unit (WTRU) and a second LTF sequence from a second WTRU, wherein the first WTRU and the second WTRU are capable of MU-MIMO operation, the first LTF sequence comprises a first plurality of LTF symbols corresponding to a first row of entries of a matrix, and the second LTF sequence comprises a second plurality of LTF symbols corresponding to a second row of entries of the matrix; and
estimating the MU-MIMO channel based on the first LTF sequence and the second LTF sequence.

FIG. 2

**EP 3 367 586 A1**

**Description**

**CROSS REFERENCE TO RELATED APPLICATIONS**

This application claims the benefit of U.S. Patent Application 61/644,872, filed on May 9, 2012, the entire contents of which are hereby incorporated by reference herein.

**BACKGROUND**

Wireless local area networks (WLANs) are becoming an increasing popular mode of communications by which stations (STAs) or wireless transmit and receive units (WTRUs), communicate with network nodes, or access points (APs). As the number of users of WLANs increase, bandwidth resources are becoming increasingly contested and limited. Additionally, newer applications such as high definition television require more bandwidth.

Therefore, there is a need in the art for methods and apparatuses for multi-user (MU) multiple input multiple output (MIMO) communications in APs, WTRUs and WLANs.

**SUMMARY**

Stations (STAs), access points (APs) and methods related to beamforming where transmitters serve as beamformers and receivers serve as beamformees are disclosed. A method for use on a station (STA) is disclosed. The method may include receiving a first message from an access point (AP) that comprises a beamformee capability element. The method may include sending a second message to the AP that comprises a beamformer capability element. The method may include receiving, from the AP, a third message in response to the second message that indicates a group to which the STA is assigned, wherein the group is based on the beamformer capability element and the group indicates uplink (UL) transmission information to be used by the STA for UL transmissions.

A method for use on an AP is disclosed. The method may include sending a first message to one or more stations (STAs) that comprises a beamformee capability element that indicates the AP is capable of Very High Throughput (VHT). The method may include receiving one or more second messages from the one or more STAs, wherein the one or more second messages each comprise a beamformer capability element. The method may include determining a group for each of the one or more STAs based at least partially on the beamformer capability element. The method may include sending at least one third message that indicates the group to which each of the one or more STAs is assigned, wherein the group is based on the beamformer capability element and the group indicates uplink (UL) transmission information to be used by the STA for UL transmissions.

A method for use on an AP is disclosed. The method may include receiving from a station (STA) a first message with a low overhead preamble for uplink (UL) multiple user (MU) multiple input (MI) multiple output (MO), UL MU-MIMO.

**BRIEF DESCRIPTION OF THE DRAWINGS**

A more detailed understanding may be had from the following description, given by way of example in conjunction with the accompanying drawings wherein:

FIG. 1A is a system diagram of an example communications system in which one or more disclosed embodiments may be implemented;
FIG. 1B is a system diagram of an example wireless transmit/receive unit (WTRU) that may be used within the communications system illustrated in FIG. 1A;
FIG. 1C is a system diagram of an example radio access network and an example core network that may be used within the communications system illustrated in FIG. 1A;
FIG. 2 is a schematic illustration of a communications system in which one or more disclosed embodiments may be implemented;
FIG. 3 is a schematic illustration of a frame according to some disclosed embodiments;
FIG. 4 is a schematic illustration of a frame according to some disclosed embodiments;
FIG. 5 is a schematic illustration of a frame according to some disclosed embodiments;
FIGS. 6A and 6B are schematic illustrations of frames according to some disclosed embodiments;
FIGS. 7A and 7B are schematic illustrations of sending frames according to some disclosed embodiments;
FIG. 8 is a schematic illustration of sending frames according to some disclosed embodiments;
FIG. 9 is an illustration of a capabilities portion of a frame for UL MU-MIMO and DL MU-MIMO support according to some disclosed embodiments;
FIG. 10A is a schematic illustration of an information element according to some disclosed embodiments;

FIG. 10B is a schematic illustration of an information element according to some disclosed embodiments;

FIG. 11 is a schematic illustration of a method of user group information acquisition according to some disclosed embodiments;

FIG. 12 is a schematic illustration of an AP determining initial groups for UL MU-MIMO according to some disclosed embodiments;

FIGS. 13A and 13B are schematic illustrations of an example of a UL MU-MIMO group management information element or field according to some disclosed embodiments;

FIG. 14 is a schematic illustration of a broadcast UL MU-MIMO group management information element or field according to some disclosed embodiments;

FIG. 15 is a schematic illustration of a group info field according to some disclosed embodiments;

FIG. 16 is a schematic illustration of a member info field according to some disclosed embodiments;

FIG. 17 is a schematic illustration of a method of managing UL MU-MIMO groups according to some disclosed embodiments;

FIG. 18 is a schematic illustration of a method for group maintenance according to some disclosed embodiments;

FIG. 19 is an illustration of a frequency synchronization method for UL MU-MIMO transmissions according to some disclosed embodiments;

FIG. 20 is an illustration of a frequency synchronization method for UL MU-MIMO transmissions according to some disclosed embodiments;

FIG. 21 is a schematic illustration of combined DL/UL MU-MIMO transmissions according to some disclosed embodiments;

FIG. 22 is a schematic illustration of combined DL/UL MU-MIMO transmissions according to some disclosed embodiments;

FIG. 23 is an illustration of a method of timing synchronization according to some disclosed embodiments;

FIG. 24 is an illustration of a method of timing synchronization according to some disclosed embodiments; and

FIG. 25 is a schematic illustration of transmission for UL MU-MIMO with unequal bandwidth according to some disclosed embodiments.

## DETAILED DESCRIPTION

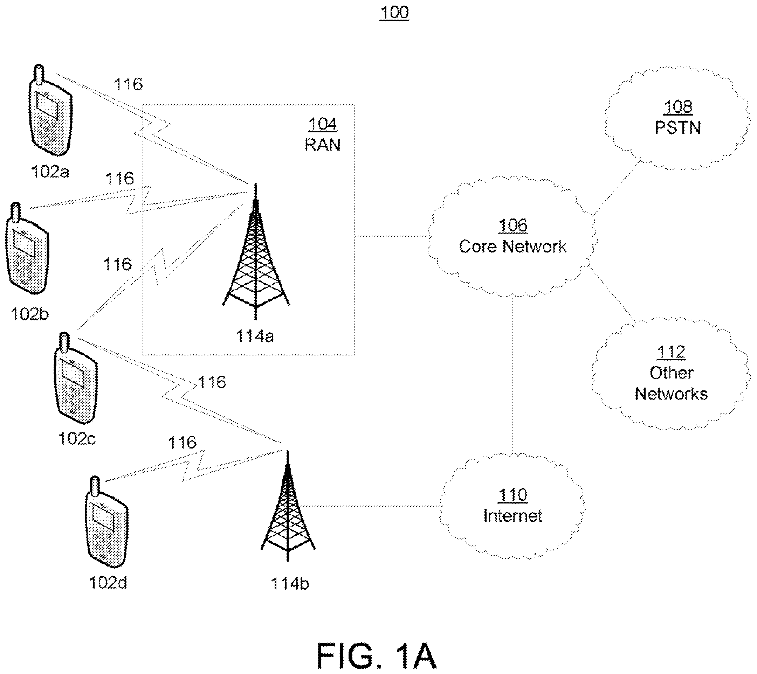

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

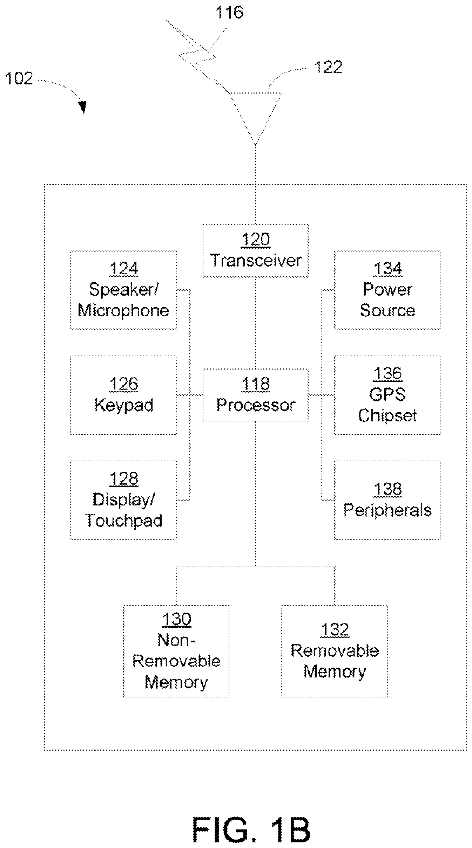

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 106, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 106 and/or the removable memory 132. The non-removable memory 106 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

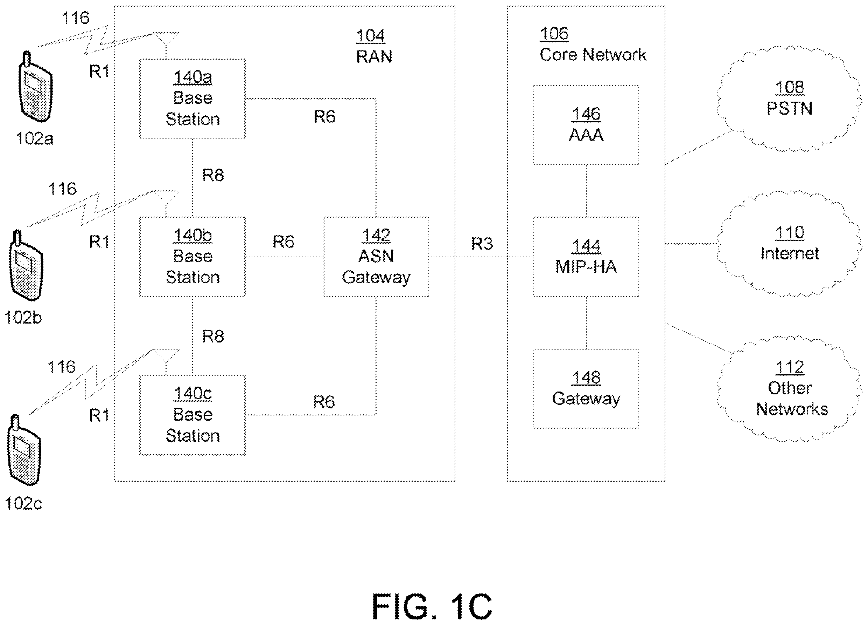

FIG. 1C is a system diagram of the RAN 104 and the core network 106 according to an embodiment. The RAN 104 may be an access service network (ASN) that employs IEEE 802.16 radio technology to communicate with the WTRUs 102a, 102b, 102c over the air interface 116. As will be further discussed below, the communication links between the different functional entities of the WTRUs 102a, 102b, 102c, the RAN 104, and the core network 106 may be defined as reference points.

As shown in FIG. 1C, the RAN 104 may include base stations 140a, 140b, 140c, and an ASN gateway 142, though it will be appreciated that the RAN 104 may include any number of base stations and ASN gateways while remaining consistent with an embodiment. The base stations 140a, 140b, 140c may each be associated with a particular cell (not shown) in the RAN 104 and may each include one or more transceivers for communicating with the WTRUs 102a, 102b, 102c over the air interface 116. In one embodiment, the base stations 140a, 140b, 140c may implement MIMO technology. Thus, the base station 140a, for example, may use multiple antennas to transmit wireless signals to, and receive wireless signals from, the WTRU 102a. The base stations 140a, 140b, 140c may also provide mobility management functions, such as handoff triggering, tunnel establishment, radio resource management, traffic classification, quality of service (QoS) policy enforcement, and the like. The ASN gateway 142 may serve as a traffic aggregation point and may be responsible for paging, caching of subscriber profiles, routing to the core network 106, and the like.

The air interface 116 between the WTRUs 102a, 102b, 102c and the RAN 104 may be defined as an R1 reference point that implements the IEEE 802.16 specification. In addition, each of the WTRUs 102a, 102b, 102c may establish a logical interface (not shown) with the core network 106. The logical interface between the WTRUs 102a, 102b, 102c and the core network 106 may be defined as an R2 reference point, which may be used for authentication, authorization, IP host configuration management, and/or mobility management.

The communication link between each of the base stations 140a, 140b, 140c may be defined as an R8 reference point that includes protocols for facilitating WTRU handovers and the transfer of data between base stations. The communication link between the base stations 140a, 140b, 140c and the ASN gateway 215 may be defined as an R6 reference point. The R6 reference point may include protocols for facilitating mobility management based on mobility events associated with each of the WTRUs 102a, 102b, 100c.

As shown in FIG. 1C, the RAN 104 may be connected to the core network 106. The communication link between the RAN 104 and the core network 106 may defined as an R3 reference point that includes protocols for facilitating data transfer and mobility management capabilities, for example. The core network 106 may include a mobile IP home agent (MIP-HA) 144, an authentication, authorization, accounting (AAA) server 146, and a gateway 148. While each of the foregoing elements are depicted as part of the core network 106, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 144 may provide the WTRUs 102a, 102b, 102c with access to packet-switched networks, such as the Internet 110, to facilitate communications between the WTRUs 102a, 102b, 102c and IP-enabled devices. The AAA server 146 may be responsible for user authentication and for supporting user services. The gateway 148 may facilitate interworking with other networks. For example, the gateway 148 may provide the WTRUs 102a, 102b, 102c with access to circuit-switched networks, such as the PSTN 108, to facilitate communications between the WTRUs 102a, 102b, 102c and traditional land-line communications devices. In addition, the gateway 148 may provide the WTRUs 102a, 102b, 102c with access to the networks 112, which may include other wired or wireless networks that are owned and/or operated by other service providers.

Although not shown in FIG. 1C, it will be appreciated that the RAN 104 may be connected to other ASNs and the core network 106 may be connected to other core networks. The communication link between the RAN 104 the other ASNs may be defined as an R4 reference point, which may include protocols for coordinating the mobility of the WTRUs 102a, 102b, 102c between the RAN 104 and the other ASNs. The communication link between the core network 106 and the other core networks may be defined as an R5 reference, which may include protocols for facilitating interworking between home core networks and visited core networks.

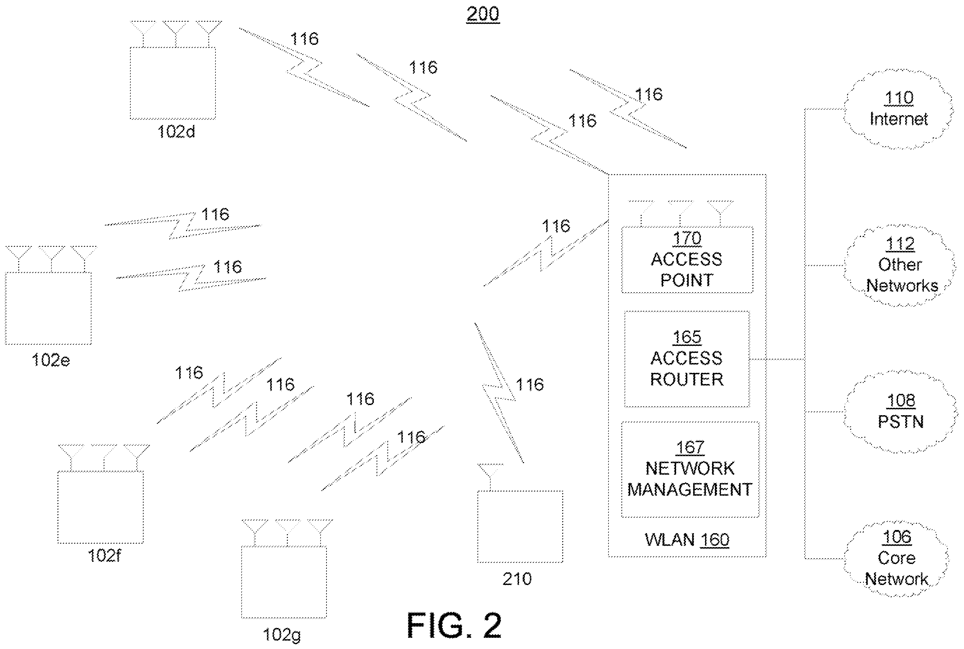

FIG. 2 schematically illustrates a communications system in which one or more disclosed embodiments may be implemented. Illustrated in FIG. 2 are a plurality of WTRUs 102d, 102e, 102f, 102g, 210, WLAN 160, a core network 106, a PSTN 108, other networks 112, and the Internet 110. The WLAN 106 may include an access router 165. The WLAN 106 may be one or more of an 802.11, 802.15, 802.16, or 802.1x network. The WTRUs 102d, 102e, 102f, 102g, 102h are often referred to as STAs or UEs. In some embodiments, a STA 102d, 102e, 102f, 102g, 210 is defined by having an address to access the STA 102d, 102e, 102f, 102g, 210. The WLAN 106 may be directly connected to or indirectly connected to one or more of the WTRUs 102d, 102e, 102f, 102g, 210 a core network 106, a PSTN 108, other network 112, and the Internet 110.

The WTRUs 102d, 102e, 102f, 102g, 210 may be considered clients (CL) to the AP 170. The WTRUs 102d, 102e, 102f, 102g, 210 may or may not be associated with a WLAN 160. The WTRUs 102d, 102e, 102f, 102g, 210 may be associated with one or more of the core network 106, the PSTN 108, other network 112, the Internet 110, service 206c, another WTRU 102d, 102e, 102f, 102g, 210 or the WLAN 106.

In some embodiments, the AP 170 may be an access point for Institute of Electrical and Electronic Engineers (IEEE) 802.11, a base station for IEEE 802.16, or another transmit and receive device for access to the WLAN 160. The AP 170 may have multiple antennae and some of the WTRUs, for example WTRUs 102d, 102e, 102f, 102g, may have multiple antennae. The AP 170 and WTRUs 102d, 102e, 102f, 102g may be configured to communicate using the multiple antennae in uplink (UL) and downlink (DL) multiple user (MU) multiple input and multiple output (MIMO) (UL/DL MU-MIMO.) Some WTRUs, for example WTRU 210, may not have multiple antennae. Accordingly, example WTRU 210 cannot be configured to communicate with UL/DL MU-MIMO, or to participate in UL/DL MU-MIMO where multiple antennae are required..

The network management 167 may provide network management 167 services for the WLAN 160. The network management 167 may be a separate device or may be integrated with another component of the WLAN 160. For example, the network management 167 may be integrated with the AP 170, or another device of the WLAN 160 such as a computing device (not illustrated). The AP 170 throughout the disclosure may refer to both the AP 170 and the network management 167. In some embodiments, some of the functionality of the network management 167 may be split between two or more components of the WLAN 160. The network management 167 may be configured to provide network management services such as Network Address Translator (NAT) services, Internet Protocol (IP) filter services, IP gateway services, etc. In some embodiments, some of the network management 167 may be performed outside the WLAN 160.

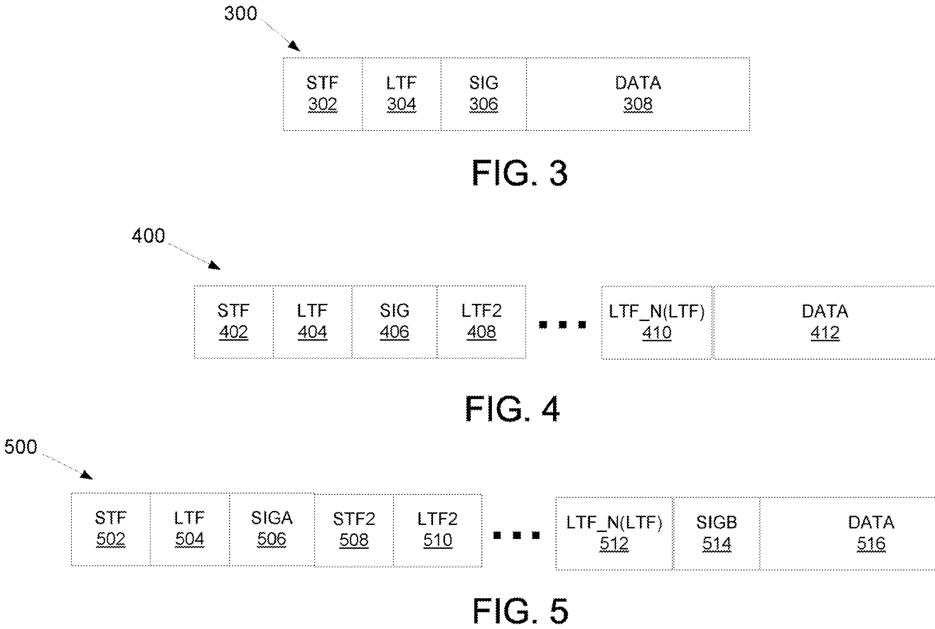

FIG. 3 schematically illustrates a frame according to some disclosed embodiments. The frame 300 includes a short training field (STF) 302, a long training field (LTF) 304, a signal (SIG) field 306, and data 308. In some embodiments, the frame 300 may be a physical layer convergence protocol (PLCP) frame that a WTRU 102d, 102e, 102f, 102g sends to an AP 170. In some embodiments, the WTRU 102d, 102e, 102f, 102g may send the frame 300 to an AP 170 as part of a UL MU-MIMO transmission. The STF 302 may be a sequence of orthogonal frequency division multiplexing (OFDM) symbols that indicate to the AP 170 that the PLCP frame 300 is beginning, and may assist the AP 170 in synchronizing timers, and selecting one or more antennas. The LTF 304 may be a sequence of symbols that assist in demodulating the frame 300. The SIG field 306 may describe attributes of the frame 300 such as the coding, modulation, channel width, and whether the frame is a multi-user frame or a single user frame.

In some WLANs 160, the STF 302, LTF 304, and SIG field 306 may be a preamble. The AP 170 and WTRUs 102d, 102e, 102f, 102g may use the preamble for automatic-gain control (AGC), timing/frequency offset estimation, channel estimation, and physical (PHY) layer control messages transmission.

In some WLANs 160, PHY control information is transmitted in the SIG field 306 within each PLCP protocol data unit (PPDU). In some embodiments, the frame 300 is a PPDU. The information in the SIG field 306 may be used to decode the data 308. Multiple SIG fields 306 may be transmitted to the AP 170 by two or more WTRU 102d, 102e, 102f, 102g, which may significantly increase the preamble overhead of the transmission.

In some embodiments, the frame 300 may be sent by the WTRU 102d, 102e, 102f, 102g as part of a Greenfield mode. In some embodiments, a frame 300 in Greenfield may not be able to be decoded by a WTRU 210 that is not UL MU-MIMO capable. In some embodiments, the AP 170 may inform one or more WTRUs 102d, 102e, 102f, 102g to use Greenfield mode frames 300. In some embodiments, the AP 170 may inform the one or more WTRUs 102d, 102e, 102f, 102g to use Greenfield mode frames 300 when UL MU-MIMO transmission is set up by the MAC signaling procedures. In some embodiments, one or more WTRUs 210 may set their NAV to ignore the one or more Greenfield mode frames 300 according to MAC handshakes before the one or more Greenfield mode frames 300 are sent. In some embodiments, a frame 300 in Greenfield mode may have a different STF 302, LTF 304 or SIG field 306. For example, since UL MU-MIMO transmission may be controlled by the AP 170, a shortened SIG field 106, or no SIG field 106 may be used.

In some embodiments, the AP 170 may select the Greenfield mode to be used based on one or more of the following: AP 170 capability, WTRU 102d, 102e, 102f, 102g capability, grouping methods to use, MAC signaling, and procedures which defines the UL MU-MIMO session.

In some embodiments, when the WTRUs 102d, 102e, 102f, 102g simultaneously send within the same frequency band to the AP 170, the AP 170 may need to distinguish the different WTRUs 102d, 102e, 102f, 102g. In some embodiments, the AP 170 may need to distinguish between the different WTRUs 102d, 102e, 102f, 102g, estimate the channel state information of each WTRU 102d, 102e, 102f, 102g, and detect the packets of each WTRU 102d, 102e, 102f, 102g. In some embodiments, the WTRUs 102d, 102e, 102f, 102g send training symbols so that the AP 170 can receive the training symbols without co-channel interference between the different training symbols. In some embodiments, the WTRUs 102d, 102e, 102f, 102g may use reduced overhead preambles for uplink (UL) multiple-user (MU) multiple input/multiple output (MIMO), (UL MU-MIMO).

FIG. 4 schematically illustrates a frame according to some disclosed embodiments. Illustrated in FIG. 4 are a STF 402, a LTF 404, a SIG field 406, a LTF2 408, a LTF_N (LTF) 410, and a data field 412. The frame 400 may be a PPDU frame. In some embodiments, the STF 402 and LTF 404 may be two symbols. The frame 400 may have a mixed mode preamble where the SIG field 406 may be shortened or the SIG field 406 may be a dummy field so that WTRUs 210 can detect the frame 400 and set a network allocation vector (NAV) of the WTRU 210 accordingly. The SIG field 406 may not include enough information for the AP 170 to decode the frame 400 without other information. In some embodiments, the AP 170 can decode the frame 400 without a complete SIG field 406 because the AP 170 controls the UL MU-MIMO transmission and has knowledge of the frame 400 sufficient to decode the frame 400 without a complete SIG field 406. In some embodiments, the WTRUs 102d, 102e, 102f, 102g may send the frame 400 to the AP 170. In some embodiments, the AP 170 may instruct the one or more WTRUs 102d, 102e, 102f, 102g to send the frame 400 to the AP 170.

FIG. 5 schematically illustrates a frame according to some disclosed embodiments. The frame 500 may include a STF 502, a LTF 504, SIGA field 506, a STF2 508, a LTF2 510, a LTF_N (LTF) 512, a SIGB field 514, and a data field 516. In some embodiments, the frame 500 may be a traditional mixed mode frame. In some embodiments, the WTRUs 102d, 102e, 102f, 102g may use the frame 500 for UL MU-MIMO PPDUs.

In some embodiments, the one or more WTRUs 102d, 102e, 102f, 102g send one of the frames 300 or 400 over the same frequency band to the AP 170 to enable the AP 170 to achieve accurate channel estimation. The frames 300 or 400 may have reduced preambles and thus reduce the time for UL MU-MIMO transmissions.

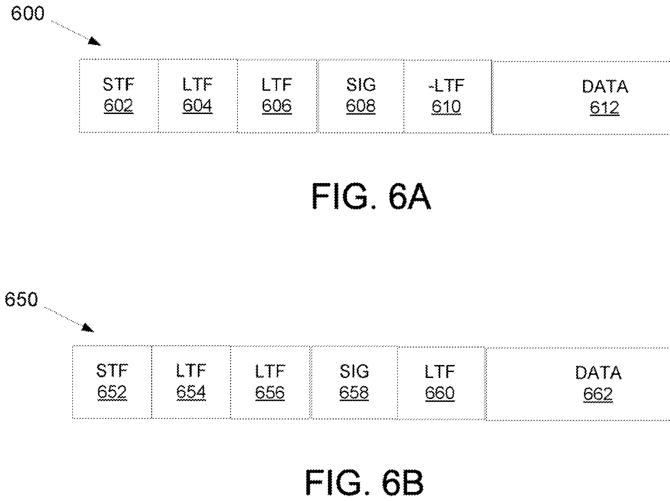

FIGS. 6A and 6B schematically illustrate frames according to some disclosed embodiments. The frames 600, 650 may be used by a first WTRU 102d, 102e, 102f, 102g and a second WTRU 102d, 102e, 102f, 102g in a mixed mode where the SIG fields 608, 658 may be shortened or the SIG fields 608, 658 may be a dummy field so that WTRUs, such as WTRU 210, that may not be MU-MIMO WTRUs, can detect the frame 400 and set a NAV of such WTRU 210 accordingly.

In some embodiments, the LTFs and -LTFs 604, 606, 610, 654, 656, 660 may be used by the AP 170 to distinguish which WTRU 102d, 102e, 102f, 102g sent the frames 600, 650. The LTFs and -LTFs 604, 606, 610, 654, 656, and 660 may be a type of spreading code where the number of LTFs 604, 606, 610, 654, 656, and 660 may vary depending on the number of WTRUs 102d, 102e, 102f, 102g, and where each WTRU 102d, 102e, 102f, 102g may use a different sequence of LTFs and -LTFs 604, 606, 610, 654, 656, and 660. The LTFs and - LTFs 604, 606, 610, 654, 656, and 660 may be used for fine frequency offset estimation, fine timing estimation and channel estimation.

The LTF design for UL MU-MIMO may use a P matrix as defined in WLAN 160 standards such as IEEE 802.11 standard. For example, for four WTRUs 102d, 102e, 102f, 102g, the following matrix may be used to provide a unique sequence of -1 and +1 to a WTRU 102d, 102e, 102f, 102g to construct he frame 600, 650.

Table 1 - Example Matrix P:

$$P_{4,4} = \begin{bmatrix} 1 & -1 & 1 & 1 \\ 1 & 1 & -1 & 1 \\ 1 & 1 & 1 & -1 \\ -1 & 1 & 1 & 1 \end{bmatrix}$$

Each of the WTRUs 102d, 102e, 102f, 102g may use one of the row of P to construct the frame 600, 650. In some embodiments, the WTRUs 102d, 102e, 102f, 102g using P may be limited to WTRUs 102d, 102e, 102f, 102g that are UL MU-MIMO STAs. For example, if four UL MU-MIMO WTRUs 102d, 102e, 102f, 102g send frames 600,650 simultaneously, and each WTRU 102d, 102e, 102f, 102g has one data stream, then each WTRU 102d, 102e, 102f, 102g needs to send four LTFs, which may be four OFDM symbols. For example, the WTRUs 102d, 102e, 102f, 102g may respectively send: [LTF, -LTF, LTF, LTF], [LTF, LTF, -LTF, LTF], [LTF, LTF, LTF, -LTF], and [-LTF, LTF, LTF, LTF]. The number of LTFs and -LTFs 604, 606, 610, 654, 656, 660, may be determined by the total number of space time streams in UL MU-MIMO transmission. In some embodiments, the format of LTFs and -LTFs 604, 606, 610, 654, 656, 660 enable the AP 170 to perform fine frequency offset estimation, fine timing estimation and channel estimation in UL MU-MIMO transmission.

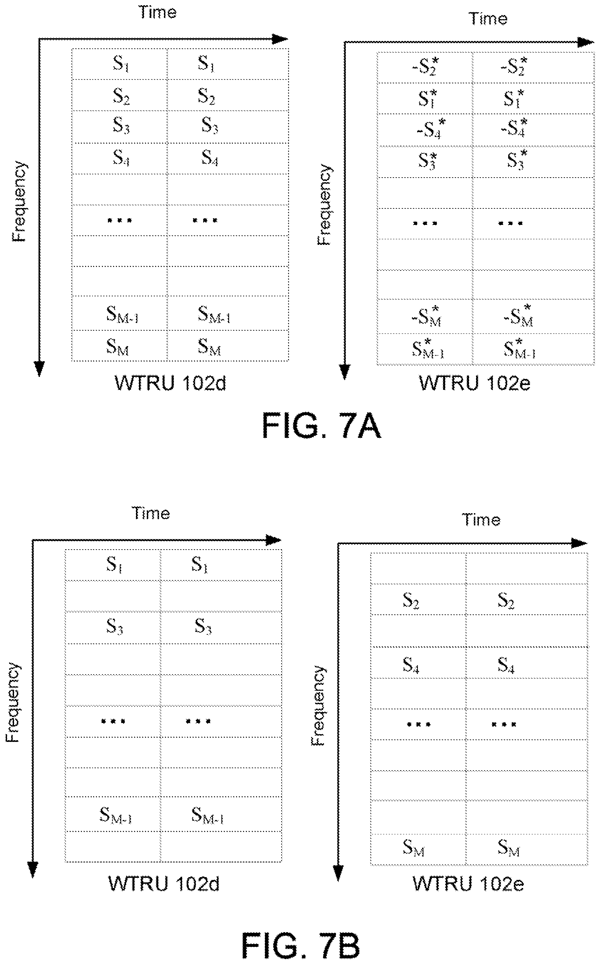

FIGS. 7A and 7B schematically illustrate sending frames according to some disclosed embodiments. The WTRUs 102d, 102e, 102f, 102g may use distributed space-frequency block coding (SFBC). SFBC may be effective when the channels over adjacent subcarriers do not vary too much. FIG. 7A illustrates an example of using distributed SFBC with two UL MU-MIMO WTRUs 102d, 102e, 102f, 102g. WTRU 102d may send LTFs as $S_1$, $S_2$, $S_3$, $S_4$, $S_{M-1}$, $S_M$ while WTRU 102e sends modified LTFs as $-S_2^*$, $S_1^*$, $-S_4^*$, $S_3^*$, $-S_M^*$, $-S_{M-1}^*$ in which two adjacent subcarriers form a pair, and are SFBC coded. The use of the modified LTFs may be extended to more than the two UL MU-MIMO WTRU 102d, 102e. In some embodiments, the LTFs may have less overhead. In some embodiments, the LTF may be in a Greenfield mode to reduce the overhead.

In some embodiments, the LFTs may be sent in a staggered format. For example, illustrated in FIG. 7B is WTRU 102d sending Si, $S_3$, ... , $S_{M-1}$ and WTRU 102e sending $S_2$, $S_4$, ... , $S_M$ where WTRU 102d and WTRU 102e send the LFTs on staggered frequencies. In some embodiments, more than two WTRUs 102d, 102e, 102f, 102g may stagger the subcarrier or frequencies used to send the LFT using every nth subcarrier with n being the number of WTRUs.

The AP 170 may process received LFTs as follows. The AP 170 may generate the same LFT preambles assuming that different WTRUs 102d, 102e, 102f, 102g are sending in different subcarriers according to a predefined sequence. The AP 170 may use the matrix preamble for least squares (LS) estimation for the WTRUs 102d, 102e, 102f, 102g. The AP 170 may multiply the received matrix with a Hermitian transpose of the frequency domain matrix for each sub-carrier. The AP 170 may estimate minimum mean-square error (MMSE) to improve the estimate. The AP 170 may then separate different channels for the WTRUs 102d, 102e, 102f, 102g. The AP 170 may smooth the channel estimates to reduce the MMSE.

In some embodiments, the LTFs (see FIGS. 3-6B) for MU-MIMO may be sequences with zero auto correlation (ZAC) property. A general chirp like (GCL) sequence of length N may be used because GCL has ZAC property. The Zadoff-Chu (ZC) sequence is a special case of GCL sequence. For the case where $N$ is a prime number, a GCL sequence with root index $r$ and cyclic shift $s$ can be written as:

$$g_r(n, s) = exp\left[j2\pi\frac{ns}{M}\right] \times exp\left[-j2\pi r\frac{\frac{n(n+1)}{2}}{N}\right],$$

where root index r = 0, 1, ... , $N$ -1,
$n$ = 0, 1, ..., $N$ -1,
$M$ is the number of unique cyclic shifts, and
the cyclic shift s = 0, 1, ..., $M$ -1.

For a given length $N$ and the same root index $r$, the GCL sequences of different cyclic shifts may be orthogonal to each other with a period of $N$. And GCL sequences going through channels can remain orthogonal as long as their cyclic shifts difference is larger than the channel impulse response. Hence, for the application of LTF sequence, the value of $M$ can be chosen by the AP 170 or WTRUs 102d, 102e, 102f, 102g appropriately so that cyclic shifts difference is larger than the channel impulse response and timing misalignment in typical WLAN 160 deployment scenarios. For example, for typical indoor case 802.11n/ac 20MHz channel with 64 subcarriers, the OFDM symbol duration is 3.2 μs. Then, M can be chosen by the AP 170 or WTRU 102d, 102e, 102f, 102g to be 4 to provide a zero cross-correlation zone which allows for a sum of timing alignment and delay spread up to 800 ns.
For the case where $N$ is a power of 2, a GCL sequence with root index $r$ and cyclic shift $s$ can be written as

$$g_r(n, s) = exp\left[-j2\pi r\frac{\frac{n(n+2s)}{2}}{N}\right],$$

where root index $r$ = 0, 1, ...,
$N$ -1, $n$ = 0, 1, ..., $N$ -1, and
the cyclic shift s = 0, 1, ..., $N$ -1.

The following applies for the prime number case of GCL sequences. The method may be extended by the AP 170 or the WTRUs 102d, 102e, 102f, 102g for the case where N is a power of 2. Suppose that there are $K$ STAs transmitting simultaneously using MU-MIMO in the uplink. Then, each $WTRU_k$ ($k$ = 1, 2, ..., $K$) may transmit a WTRU-specific LTF sequence using GCL sequence with cyclic shift $s_k$, that is $g_r(n, s_k)$. As long as K is no greater than M, and each WTRU 102d, 102e, 102f, 102g uses a different cyclic shift $s_k$, these LTF sequences are orthogonal. If the number of subcarriers used for LTF is $N_{subcarrier}$, then the LTF sequence of $WTRU_k$ {$C_k$ (p)}, p = 0, 1, 2, ..., $N_{subcarrier}$ is given by $C_K(P) = g_r$ ((p mod N), $s_k$).
In some embodiments, a different method may be used by the AP 170 or WTRUs 102d, 102e, 102f, 102g where the solution uses fewer number of LTF symbols at each WTRU 102d, 102e, 102f, 102g, and therefore has lower LTF overheads.
In some embodiments, LTFs transmitted by different WTRUs 102d, 102e, 102f, 102g are phase shifted (because of the cyclic shifts for different users) in frequency domain. Their time domain equivalents may be separated in time. The receiver, AP 170 or WTRU 102d, 102e, 102f, 102g, may use this property following processing to retrieve the channel estimates after LTFs from multiple WTRUs 102d, 102e, 102f, 102g are received. The method may be performed by the AP 170 or the WTRUs 102d, 102e, 102f, 102g. The method may include removing the CP. The method may continue with converting data to the frequency domain. The method may continue with LS estimatation that may include matched filtering and multiplying with Hermitian transpose of the original sequence in the frequency domain and concatenating for all the WTRUs 102d, 102e, 102f, 102g. MMSE estimate may also be taken for better performance. The method may continue with taking Inverse Discrete Fourier Transform (IDFT) to obtain channel impulse response (CIR). The method may include identifying by the shift in constant amplitude zero autocorrelation (CAZAC) sequence, the shift the WTRU 102d, 102e, 102f, 102g had used. There may be multiple impulse responses separated in time, which may be different for different WTRUs 102d, 102e, 102f, 102g. The method may include separate impulse responses used for detection for all of the WTRUs 102d, 102e, 102f, 102g. The method may include taking Discrete Fourier Transform (DFT) to retrieve channel transfer function (CTF) of the WTRUs 102d, 102e, 102f, 102g for the decoding. In some embodiments, band-edge oscillations may be removed by windowing or other techniques.

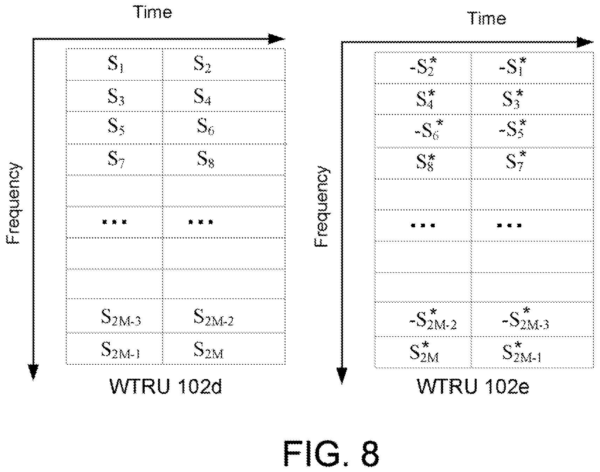

FIG. 8 schematically illustrates sending frames according to some disclosed embodiments. In some embodiments, the information in the SIG field 306, 406, 502, 608, 658 (see FIGS. 5 and 6) sent by two or more WTRUs 102d, 102e, 102f, 102g may be duplicative. In some embodiments, the SIG field 306, 406, 502, 608, 658 may be shortened or transmitted simultaneously by all users. In some embodiments, the WTRUs 102d, 102e, 102f, 102g may send the same SIG field 306, 406, 502, 608, 658.

In some embodiments, when Greenfield mode is used, the SIG field 306, 406, 502, 608, 658 may have two or more OFDM symbols in common. In some embodiments, distributed space-time blocking code (STBC) can be used by the AP 170 and the WTRUs 102d, 102e as illustrated in FIG. 8. The AP 170 may determine spatial diversity by decoding the STBC encoded SIG field 306, 406, 502, 608, 658. The AP 170 may utilize the decoded information bits as additional training sequences and perform channel estimation and frequency offset tracking. In some embodiments, the AP 170 may perform channel estimation per subcarrier with one channel estimation per subcarrier. The WTRU 102d, 102e may be UL MU-MIMO WTRU.

In some embodiments, the SIG field 306, 406, 502, 608, 658 (see FIGS. 5 and 6) may be removed or shorted. The AP 170 may determine whether and how to perform UL MU-MIMO transmissions since the AP 170 may have knowledge of traffic information, physical channel, RSSI, for the WTRUs 102d, 102e, 102f, 102g. The AP 170 may determine the modulation and coding scheme for UL MU-MIMO transmissions. In some embodiments, the SIG field 306, 406, 502, 608, 658 may be left out or shortened. In some embodiments, if the UL MU-MIMO transmission is within a contention free period or a transmission opportunity (TXOP), the uplink SIG field 306,406, 502,608,658 sent by UL MU-MIMO WTRUs 102d, 102e, 102f, 102g may be shorted or left out. In some embodiments, DL MU-MIMO mixed transmission of STBC and non-STBC may be used for UL MU-MIMO transmissions.

In some embodiments, when UL MU-MIMO transmission is protected by MAC signaling or handshakes, so that the transmission is within a contention free period or an acquired TXOP, the SIG field 306, 406, 502, 608, 658 may be removed in the UL MU-MIMO frame sent by the WTRUs 102d, 102e, 102f, 102g. In some embodiments, the AP 170 may assign bandwidth (BW), space-time block codes (STBC), group identification (ID), number of space-time streams (NSTS), guard interval (GI), length, modulation and coding scheme (MCS) to the WTRUs 102d, 102e, 102f, 102g. In some embodiments, the AP 170 may broadcast a UL MU-MIMO management frame (UMM) which includes one or more of a bandwidth (BW) assignment, STBC, Group ID, NSTS, GI, length, or MCS.

In some embodiments a shortened SIG field 306, 406, 502, 608, 658 may be used so that a WTRU may set its NAV according to the shortened SIG field 306, 406, 502, 608, 658. In some embodiments, a dummy SIG field 306, 406, 502, 608, 658 may be sent. In some embodiments, a dummy SIG field 306, 406, 502, 608, 658 follows the LTF, for example, LTF 304, 404, 504. In some embodiments, the dummy SIG field 306, 406, 502, 608, 658 may be two OFDM symbols long. In some embodiments, the dummy SIG field 306, 406, 502, 608, 658 may contain one or more of the fields represented in Table 2.

| TABLE 2 | |
|---|---|
| Field | Description |
| Length | Length corresponding to the UL MU-MIMO STA which requires maximum number OFDM symbols |
| MCS | MCS corresponding to the UL MU-MIMO STA which requires maximum number OFDM symbols |
| BW | Bandwidth of UL MU-MIMO transmission |
| GID | MU-MIMO Group ID number |
| Ack Indication | 00: Ack; 01: BA; 10: No Ack; 11: reserved |
| NSTS | Total number of uplink space-time streams from all the MU-MIMO STAs. |

In some embodiments, additional LTFs 304, 404, 504, 604, 606, 610, 654, 656, 660 for multiple space-time streams may be transmitted following the dummy SIG field 306, 406, 502, 608, 658. For example, see FIGS. 4, 5, and 6.

A WTRU 210 that is not part of the UL MU-MIMO may use the length and MCS to determine the duration of the UL MU-MIMO transmission, and set their NAV accordingly. A WTRU 102d, 102e, 102f, 102g, 210 may determine a number of LTFs 304, 404, 504, 604, 606, 610, 654, 656, 660 to expect according to NSTS. A WTRU 102d, 102e, 102f, 102g, 210 may determine which MU-MIMO group is transmitting according to GID, and set the NAV accordingly. The WTRU 102d, 102e, 102f, 102g, 210 may determine by acknowledgement (ack) indication whether a frame is an acknowledgment frame, and what type of acknowledgement frame, and set the NAV accordingly.

In some embodiments, the WTRUs 102d, 102e, 102f, 102g are grouped together in one or more groups for UL MU-MIMO. In some embodiments, the one or more groups may be overlapping.

In some embodiments, grouping of the WTRUs may be based on one or more of the following: spatial correlation at the AP 170 of frames sent by the WTRUs, arrival times at the AP 170 of frames sent by the WTRUs 102d, 102e, 102f, 102g, and power received by the AP 170 of frames sent by the WTRUs 102d, 102e, 102f, 102g.

The AP 170 may determine a spatial correlation between frames sent by the WTRUs 102d, 102e, 102f, 102g, and may determine not to group together two or more WTRUs 102d, 102e, 102f, 102g that do not have a spatial correlation below a threshold value of spatial correlation. The AP 170 may group together WTRUs 102d, 102e, 102f, 102g with a spatial correlation that is below a threshold spatial correlation.

The AP 170 may determine a difference of arrival times for frames received from the WTRUs 102d, 102e, 102f, 102g. The AP 170 may group together WTRUs 102d, 102e, 102f, 102g that have arrival times that are within threshold values for arrival times. For example, for UL MU-MIMO frames arriving at the AP 170 within one guard interval (GI) of, for example , 400 ns or 800 ns for IEEE 802.11n, or 4 μs or 8 μs for IEEE 802.11ah may be grouped together by the AP 170.

The AP 170 may determine the power level of frames received from the WTRUs 102d, 102e, 102f, 102g. The AP 170 may group together WTRUs 102d, 102e, 102f, 102g whose frames were received within threshold values. For example, the AP 170 may group together UL MU-MIMO frames arriving at the AP 170 with power levels within threshold values.

In some embodiments, the spatial correlation, arrival time, and power level may be considered essential criteria. In some embodiments, the WTRUs 102d, 102e, 102f, 102g may be grouped together based on traffic based criteria. The traffic-based criteria may include similar traffic patterns and similar quality of service (QoS) requirements.

In some embodiments, the WTRUs 102d, 102e, 102f, 102g may be grouped together based on mobility based criteria. In some embodiments, WTRUs 102d, 102e, 102f, 102g whose movement is similar may be grouped together. In some embodiments, the AP 170 receives frames from the WTRUs 102d, 102e, 102f, 102g and based on the frames determines groups for the WTRUs 102d, 102e, 102f, 102g so that the WTRUs 102d, 102e, 102f, 102g may send concurrent frames in UL MU-MIMO frames to the AP 170.

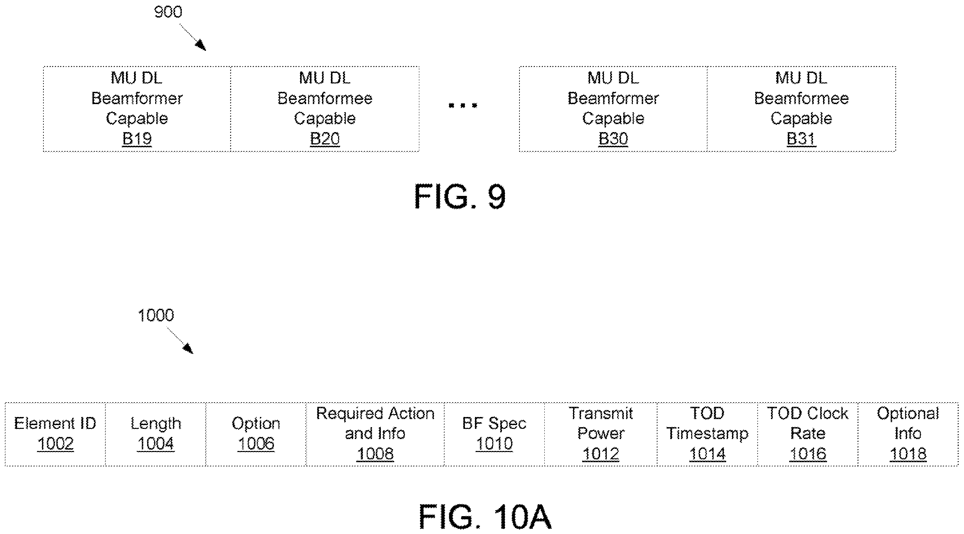

FIG. 9 illustrates a capabilities portion of a frame for UL MU-MIMO and DL MU-MIMO support according to some disclosed embodiments. Illustrated in FIG. 9 is a capabilities portion of a frame 900 which includes MU DL beamformer capable element B19, MU DL beamformee capable element B20, MU UL beamformer capable element B30, and MU UL beamformee capable element B31. In some embodiments, capabilities portion of a frame 900 may be used to indicate the capabilities of the WTRU 102d, 102e, 102f, 102g and the AP 170. The capabilities portion of a frame 900 may be used in frames such as probe response, beacon and association response.

In some embodiments, the AP 170 indicates to the WTRUs 102d, 102e, 102f, 102g that the AP 170 can support UL MU-MIMO. In some embodiments, the WTRUs 102d, 102e, 102f, 102g indicate to the AP 170 that the WTRUs 102d, 102e, 102f, 102g can support UL MU-MIMO. In some embodiments, the AP 170 indicates to the WTRUs 102d, 102e, 102f, 102g that the AP 170 can support DL MU-MIMO. In some embodiments, the WTRUs indicate to the AP 170 that the WTRUs 102d, 102e, 102f, 102g can support DL MU-MIMO.

If an AP 170 can support DL MU-MIMO, the AP 170 may set MU DL beamformer capable element B19 to a value, for example "1", to indicate it can support DL MU-MIMO. If a WTRU 102d, 102e, 102f, 102g can support DL MU-MIMO, the WTRU 102d, 102e, 102f, 102g may set MU DL beamformer capable element B20 to a value, for example "1", to indicate it can support DL MU-MIMO. If an AP 170 can support UL MU-MIMO, the AP 170 may set MU UL beamformee capable element B31 to a value, for example "1", to indicate it can support UL MU-MIMO. If a WTRU 102d, 102e, 102f, 102g can support UL MU-MIMO, the WTRU 102d, 102e, 102f, 102g may set MU UL beamformer capable element B30 to a value, for example "1", to indicate it can support UL MU-MIMO.

In some embodiments, capabilities portion of a frame 900 may be a VHT Capabilities element with VHT capabilities info field bit 19 and bit 20 renamed from MU beamformer capable and MU beamformee capable elements to MU DL beamformer capable element B19 and MU DL beamformee capable element B20. In some embodiments, capabilities portion of a frame 900 may be a VHT capabilities element with VHT capabilities info field bits 30 and 31 changed from reserved to MU UL beamformer capable element B30 and MU UL beamformee capable element B31. VHT Capabilities element may be used in frames such as probe response, beacon and association response.

In some embodiments, different bits are used to indicate whether the WTRU 102d, 102e, 102f, 102g supports DL MU-MIMO and UL MU-MIMO. In some embodiments, different bits are used to indicate whether the AP 170 supports DL MU-MIMO and UL MU-MIMO. In some embodiments, MU DL beamformer capable element B19 and MU DL beamformee capable element B20 may be in a separate information element than MU UL beamformer capable element B30 and MU UL beamformee capable element B31.

FIG. 10A schematically illustrates an information element according to some disclosed embodiments. In some embodiments the information element 1000 is a UL MU-MIMO beamformee information element 1000. In some embodiments, the UL MU-MIMO beamformee information element 1000 is used by AP 170 to support information exchange.

In some embodiments, the UL MU-MIMO beamformee information element 1000 may include element ID 1002, length 1004, option 1006, required action and information 1008, beamforming feedback specification (BF Spec) 1010, transmit power 1012, TOD timestamp 1014, TOD clock rate 1016, and optional info 1018 fields. In some embodiments, additional fields may be included in the UL MU-MIMO beamformee information element 1000.

The element ID 1002 may indicate that the information element 1000 is a UL MU-MIMO beamformee information element 1000. The length field 1004 may indicate the length of the information element 1000. The option field 1006 may indicate which types of information are contained in the UL MU-MIMO beamformee information element 1000. In some embodiments, the option field 1006 may be implemented as binary numbers to indicate the option. In some embodiments, the option field 1006 may also be implemented as a bit map to indicate the type of information contained in the UL MU-MIMO beamformee information element 1000.

The required action and info field 1008 may indicate actions and information that the AP 170 needs from a WTRU to support UL MU-MIMO. The required action and info field 1008 may be a bit map that indicates a list of information that a WTRU that wants to perform UL MU-MIMO transmission needs to provide to the AP 170 and a list actions that the WTRU needs to conduct to perform UL MU-MIMO. For example, the required action and info field 1008 may indicate a WTRU sub-band location, which may be the sub-band within the primary channel used by the AP 170, for example the second of four 5 MHz sub-bands within a 20 MHz primary channel.

The required action and information (info) field 1008 may indicate WTRU transmit power, which may be the transmit power that the WTRU 102d, 102e, 102f, 102g should use to transmit to the AP 170. The required action and info field 1008 may indicate synchronization, which may be a synchronization by the WTRUs 102d, 102e, 102f, 102g such that their clock offset and propagation delays to the AP 170 can be determined within a threshold. For example, the threshold may be several hundreds of nanoseconds. The required action and info field 1008 may indicate frequency offset, which may indicate the frequency offset that a WTRU 102 measured when receiving a current frame. The required action and info field 1008 may indicate compressed beamforming feedback. The required action and info field 1008 may indicate traffic specification. The traffic specification may be information on the expected traffic pattern such as traffic priorities, traffic data rate, maximum service intervals and minimal service intervals, sleep information, etc. that the WTRU 102d, 102e, 102f, 102g may use. The required action and info field 1008 may indicate mobility. The mobility may include an expected mobility pattern of the WTRU 102d, 102e, 102f, 102g.

The BF Spec field 1010 may indicate beamforming feedback that the UL MU-MIMO beamformers may provide. In some embodiments, the BF Spec field 1010 may be implemented in an existing VHT MIMO Control field defined in IEEE 802.11ac by using Bit 16 and/or Bit 17 which is currently reserved to indicate that the VHT MIMO Control field is used for UL MU-MIMO. For example, "Bit 16" and "Bit 17" may be set to "00" to indicate the VHT MIMO control field is used for DL MU-MIMO; "Bit 16" and "Bit 17" may be set to "01" to indicate the VHT MIMO Control field is used for UL MU-MIMO. Information included in the BF Spec field 1010 may include an $N_c$ index, which may be a number of columns $N_c$ in a compressed beamforming feedback matrix that includes subcarrier grouping, channel width, codebook information, and feedback type.

The transmit power field 1012 may indicate the transmit power used to transmit the current frame. The TOD timestamp field 1014 may be a time of departure (TOD) timestamp. For example, the TOD timestamp field 1014 may be as defined in the optional location and time measurement feature in the IEEE 802.11v standard. The TOD timestamp field 1014 may be an integer value with a time unit of 1/TOD clock rate.

The TOD clock rate field 1016 may be a time of departure clock rate. The TOD clock rate field 1016 may be as defined in the optional location and time measurement feature in the IEEE 802.11v standard. The optional information field 1018 may be other optional information that is needed to support UL MU-MIMO transmissions and receptions.

In some embodiments, the UL MU-MIMO Beamformee information element 1000 may be included in broadcast frames such as a beacon frame or action frame, which may not be ACK'ed. In some embodiments, the UL MU-MIMO Beamformee information element 1000 may be included in unicast frames such as probe response, association response or other management and control or action frames. In some embodiments, the UL MU-MIMO Beamformee information element 1000 may be used in frames to support one or more of the following: UL MU-MIMO transmit power control, synchronization, group management, or transmissions.

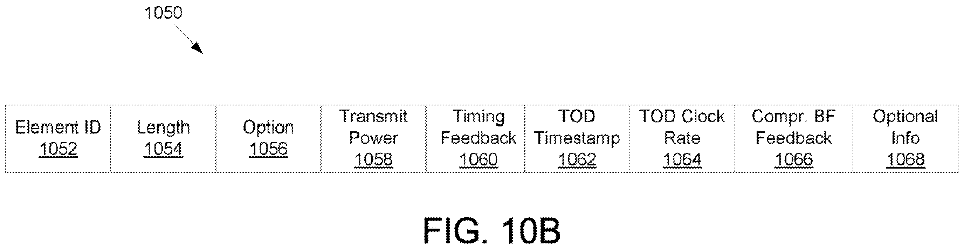

FIG. 10B schematically illustrates an information element 1050 according to some disclosed embodiments. In some embodiments, the information element 1050 may be a UL MU-MIMO beamformer information element. The UL MU-MIMO beamformer information element 1050 may include one or more of the following fields: an element ID 1052, length 1054, option 1056, transmit power 1058, timing feedback 1060, TOD timestamp 1062, TOD clock rate 1064, compressed (compre) BF feedback 1066, and optional information 1068. In some embodiments, the UL MU-MIMO beamformer information element 1050 includes additional fields.

In some embodiments, the UL MU-MIMO beamformer information element 1050 is included in a frame sent by a WTRU 102d, 102e, 102f, 102g after the WTRU 102d, 102e, 102f, 102g has received an UL MU-MIMO beamformee information element from the AP 170. In some embodiments, the WTRU 102d, 102e, 102f, 102g may want to participate in UL MU-MIMO with the AP 170.

The element ID field 1052 may identify the information element 1050 is an UL MU-MIMO beamformer information element. The length field 1054 may be a length of the information element 1050. The option field 1056 may indicate which types of information are contained in the UL MU-MIMO Beamformer IE 1050. In some embodiments, the option field 1056 may be implemented as binary numbers to indicate the option. In some embodiments, the option field 1056 may be implemented as a bit map to indicate the type of information contained. For example, the option field 1056 may include a frequency offset that the WTRU 102d, 102e, 102f, 102g measured when receiving a frame from the AP 170 containing the UL MU-MIMO Beamformee IE 1000. The option field 1056 may include a compressed beamforming feedback field 1066. The compressed beamforming feedback field 1066 may be as specified by the BF Spec field 1010 in the UL MU-MIMO Beamformee IE 1000 from the AP 170.

The option field 1056 may include a traffic specification which may be an indication of the traffic pattern the WTRU 102d, 102e, 102f, 102g may use such as traffic priorities, traffic data rate, maximum service intervals and minimal service intervals, etc. The option field 1056 may include a mobility which may be a mobility pattern the WTRU 102 may use. In some embodiments, the Mobility field may include bearings and/or speed in 3-D dimensions. In some embodiments, the mobility field may include one bit to indicate whether the WTRU 102d, 102e, 102f, 102g is stationary or mobile. In some embodiments, the mobility field may indicate a level of mobility out of a plurality of levels related to speed that the expected channel changes take place.

The transmit power field 1058 may include one or more of the following: the transmit power used to transmit the current frame, a maximum transmit power possible at the WTRU 102d, 102e, 102f, 102g, a minimum transmit power possible at the WTRU 102d, 102e, 102f, 102g, levels of transmit power possible at the WTRU 102d, 102e, 102f, 102g, power headroom at the WTRU 102d, 102e, 102f, 102g, feedback on the measured received signal strength indication (RSSI) of the last frame containing the UL MU-MIMO beamformee IE 1000 from the AP 170, and the transmit power value contained in the UL MU-MIMO beamformee IE 1000.

The timing feedback field 1060 may include a time difference T1 between the time of departure (TOD) timestamp 1064 contained in the last UL MU-MIMO Beamformee IE 1000 from the AP 170 and the timestamp when the associated frame is received at the WTRU 102d, 102e, 102f, 102g measured by the local TOD clock.

The time of departure (TOD) timestamp field 1062 may be as defined in the optional location and time measurement feature in the IEEE 802.11v standard. The TOD timestamp field 1062 may be an integer value with a time unit of 1/TOD Clock Rate. The TOD clock rate field 1064 may be as defined in the optional location and time measurement feature in the IEEE 802.11v standard. The optional information 1068 may be other information that is needed to support UL MU-MIMO transmissions and receptions such as Mobility, Traffic Spec, etc.

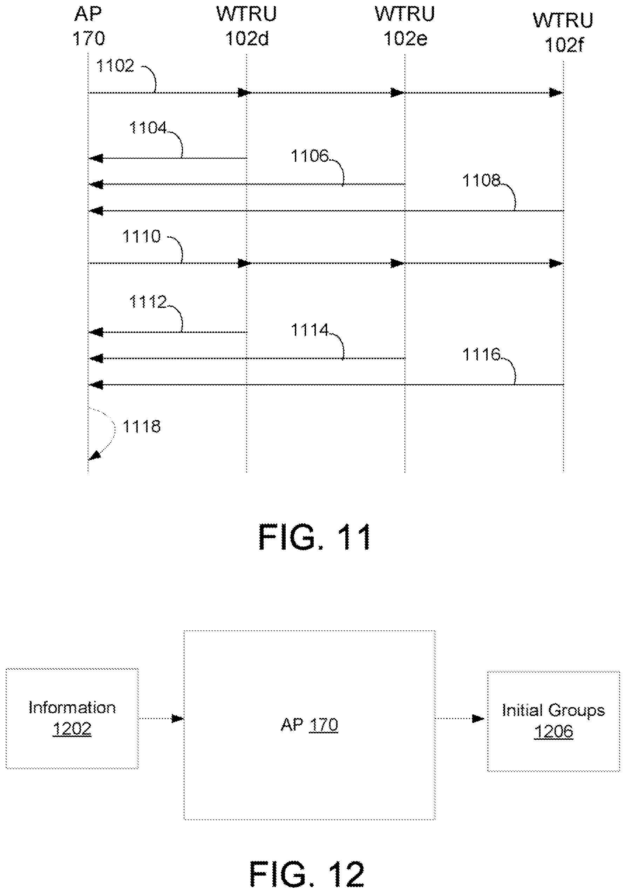

FIG. 11 schematically illustrates a method of user group information acquisition according to some disclosed embodiments. In some embodiments, the AP 170 may send a frame 1102 that may indicate its UL MU-MIMO beamformee capability. For example, the AP 170 may indicate its UL MU-MIMO beamformee capability in element B31 (FIG. 9) of a capabilities portion 900 of frame 1102. The capabilities portion 900 may be a VHT capabilities information field. The frame 1102 may be a beacon, probe response, association response, other management frame, a control frame, or an action frame.

In some embodiments, the WTRUs 102d, 102e, 102f, 102g may send frames 1104, 1106, 1108, which may indicate their UL MU-MIMO beamformer capability. For example, the WTRUs 102d, 102e, 102f, 102g may indicate their UL MU-MIMO beamformer capability in element B30 (FIG. 9) of a capabilities portion 900 of frame 1104, 1106, 1108. The capability portion 900 of frame 1104, 1106, 1108, may be a VHT capabilities information field. The frames 1104, 1106, 1108 may be a probe request, association request, or other management frame; or, a control frame or action frame.

In some embodiments, the AP 170 sends a UL MU-MIMO beamformee information element 1000 in a frame 1110. The frame 1110 may be a beacon, probe response, association response, other broadcast, unicast management, control, or action frame. The UL MU-MIMO beamformee IE 1000 may indicate the required information and actions from all UL MU-MIMO beamformer WTRUs 102d, 102e, 102f, 102g such as BF Spec 1010, etc. as discussed in association with FIG. 10A. The AP 170 may also indicate other information in the UL MU-MIMO beamformee IE 1000 such as transmit power 1012, TOD timestamp 1014, TOD clock rate 1016, as discussed in association with FIG. 10A.

In some embodiments, frames 1102, 1104, 1106, 1108 may be in a different order. For example, frame 1102 may come after frames 1104, 1106, 1108.

In some embodiments, the UL MU-MIMO beamformer WTRU 102d, 102e, 102f, 102g after receiving the UL MU-MIMO beamformee IE 1000 in frame 1110 may respond with a frame 1112, 1114, 1116, which may include UL MU-MIMO beamformer IE 1050. The UL MU-MIMO beamformer IE 1050 as discussed in association with FIG. 10B may include transmit power 1108, timing feedback 1110, which may include T1 which is the time difference measured between the TOD and Time of Arrival (TOA) of the frame 1110 containing the UL MU-MIMO beamformee IE 1000 at the WTRU 102d, 102e, 102f, 102g. The UL MU-MIMO beamformer IE 1050 may include compressed BF feedback 1116, which may be according to the BF Spec field 1010 included in the preceding UL MU-MIMO Beamformee IE 1000.

The AP 170 may determine 1118 one or more of the following. The AP 170 may determine channel state information between the WTRUs 102d, 102e, 102f, and the AP 170. The AP 170 may determine path loss. The path loss between the UL MU-MIMO beamformer (WTRU 102d, 102e, 102f, 102g) and beamformee (AP 170) may be determined by the AP 170 using Path loss = $TxPower_{AP}$ - $RSSI_{WTRU}$ or Pathloss = $TxPower_{WTRU}$ - $RSSI_{AP}$, where the $TxPower_{AP}$, $RSSI_{WTRU}$ and $TxPower_{WTRU}$ can be obtained from the UL MU-MIMO Beamformer IE 1050 and the $RSSI_{AP}$ is measured at the AP 170.

The AP 170 may determine propagation delay. The AP 170 may determine propagation delay between the UL MU-MIMO beamformer (WTRU 102d, 102e, 102f, 102g) and the beamformee (AP 170) by applying: PDelay = (T1 + $(TOA_{AP} - TOD_{WTRU})) / 2$, where T1, $TOD_{WTRU}$ can be obtained from the UL MU-MIMO Beamformer IE 1050 and the $TOA_{AP}$ can be measured at the AP 170 using the TOD clock.

The AP 170 may determine TOD Clock Offset. The AP 170 may determine the propagation delay between the UL MU-MIMO beamformer (WTRU 102d, 102e, 102f) and the beamformee (AP 170) using C_Offset = (T1 - ($TOA_{AP}$ - $TOD_{WTRU}$))/2, where T1, TODSTA can be obtained from the UL MU-MIMO Beamformer IE 1050 and the TOAAP can be measured at the AP 170 using the TOD clock.

The AP 170 may subsequently use the grouping management methods to manage UL MU-MIMO groups as discussed herein.

FIG. 12 schematically illustrates an AP determining initial groups for UL MU-MIMO according to some disclosed embodiments. Illustrated in FIG. 12 is information 1202, AP 170, and initial groups 1206. The AP 170 may be configured to determine initial groups 1204 based on the information 1202. The information 1202 may include information determined in association with the method disclosed in FIG. 11.

The UL and DL MU-MIMO groups may be the same or may be different. The AP 170 may determine the initial groups 1206 as follows. The order of the steps below may be different.

The AP 170 may first select WTRUs within a same sub-band of the primary channel. For example, if the primary channel is 20 MHz wide, some WTRUs 102d, 102e, 102f, 102g may be located within 5 or 10 MHz sub-bands.

The AP 170 may select WTRUs that are UL MU-MIMO capable and that have similar received power as measured at the AP 170. The WTRUs selected by the AP 170 may be called C1 which may be a set of candidate WTRUs from WTRUs 102d, 102e, 102f, 102g. The selected WTRUs may have a power range variation that may depend on the AP 170 processing capabilities, the WTRU power adjustment capabilities, etc.

The AP 170 may further select from the candidate set C1 WTRUs with similar propagation delays, and call these selected WTRUs C2. The AP 170 may determine the range variations among C2 WTRUs based on the GI value, BSS coverage radius and WTRU timing adjustment capabilities, etc.

The AP 170 may select groups of WTRUs such that their UL channels have satisfactorily low spatial correlations such that the UL packets can be correctly demodulated at the AP 170.

The AP 170 may further select WTRUs based on traffic priorities and periodicities, where for example, the AP 170 may select WTRUs that have similar traffic priorities or periodicities to be in a same group.

The AP 170 may determine the final UL MU-MIMO group based on maximum UL MU-MIMO group size limit. The AP 170 may send a frame that informs the WTRUs 102d, 102e, 102f, 102g of their grouping. For example, the AP 170 may send a frame that includes the UL MU-MIMO group management information element described herein.

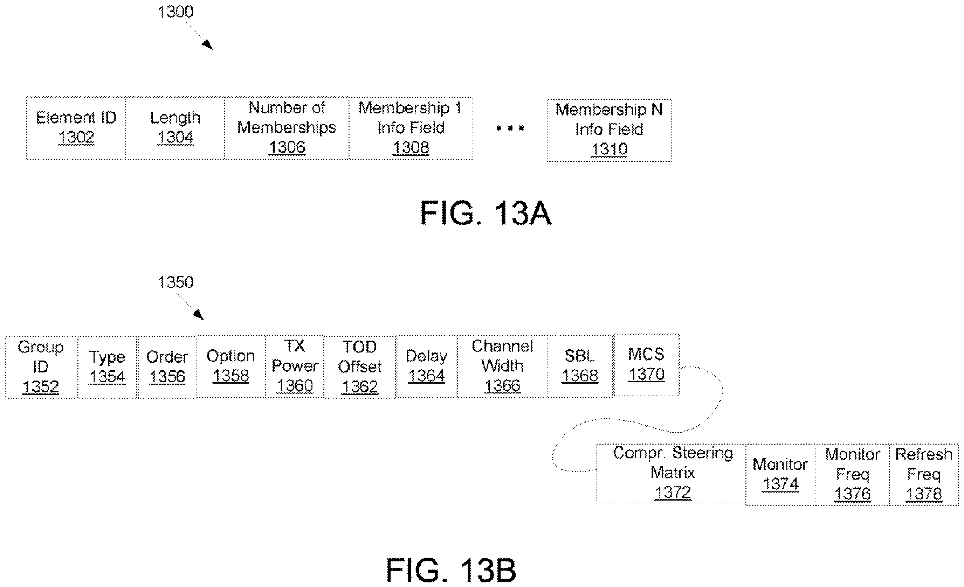

FIG. 13A schematically illustrates an example of a UL MU-MIMO group management information element or field according to some disclosed embodiments. The UL MU-MIMO group management information element or field 1300 may include one or more of the following fields: element ID 1302, length 1304, number of memberships 1306, membership 1 info field 1308 through membership N info field 1310. The element ID 1302 may identify the information element 1300 as a unicast UL MU-MIMO information element 1300. The length 1304 may be the length of the information element 1300. The number of memberships 1306 may be the number of group memberships included in the information element 1300. The membership 1 info field 1308 through membership N info field 1310 may each contain the information of a group membership for the WTRU 102d, 102e, 102f, 102g.

The AP 170 may send the UL MU-MIMO group management information element 1300 to one or more of the WTRUs 102d, 102e, 102f, 102g. The WTRUs 102d, 102e, 102f, 102g may determine the group or groups they belong to using frames containing the UL MU-MIMO group management information element or field 1300. The UL MU-MIMO group management information element 1300 may be included in a broadcast, or unicast frame, which may be a management, control, or action frame. A UL MU-MIMO WTRU 102d, 102e, 102f, 102g may belong to multiple groups. UL and DL MU-MIMO groups may be the same or may be different.

FIG. 13B schematically illustrates a membership information field according to some disclosed embodiments. The membership information field 1350 may include one or more of the following fields: group ID 1352, type 1354, order 1356, option 1358, TX power 1360, TOD offset 1362, delay 1364, channel width 1366, sub-band location (SBL) 1368, modulation and coding scheme (MCS) 1370, compressed steering matrix 1372, monitor 1374, monitor frequency 1376, and refresh frequency 1378. The group ID 1352 may be an ID of the group the membership info field 1350 is describing. The type 1354 may be a type of group, for example, the type 1354 may indicate the group is DL MU-MIMO, UL MU-MIMO or another type of group. The order 1356 may indicate an order of a WTRU within a group. The option field 1358 may be implemented as a bitmap or other encoding to indicate which types of information are included in the remainder of the membership info field 1350. The TX power field 1360 may be a transmit power a WTRU should use to transmit when conducting UL MU-MIMO transmissions in the current group. The TOD offset field 1362 may be the offset between the TOD clocks at the AP 170 and a WTRU. In some embodiments, the TOD offset 1362 may be positive or negative and can be implemented using 2's complement.

The delay field 1364 may be the delay that a WTRU may need to adjust for when participating in UL MU-MIMO transmissions to the AP 170 in the current group. The delay may be used to adjust for the difference in the propagation delay from each WTRU so that the UL MU-MIMO frames will arrive at the AP 170 within a GI.

The channel width field 1366 may be the channel width that a WTRU may use when participating in UL MU-MIMO transmissions to the AP 170 in the current group. The sub-band location (SBL) field 1368 may be the sub-band index within the primary channel, e.g. first, second, third, etc.

The modulation and coding scheme (MCS) field 1370 may be the MCS that a WTRU should adapt when participating in UL MU-MIMO transmissions to the AP 170 in the current group. The compressed steering matrix field 1372 may be a compressed steering matrix that a WTRU should adapt when participating in UL MU-MIMO transmissions to the AP 170 in the current group if this field is included as indicated by the option field 1358. The size of the steering matrix may be implicitly specified by the MCS.

A monitor field 1374, which may be one or more bits to indicate whether a WTRU should monitor for channel changes between the AP 170 and the WTRU. A monitor freq: field 1376, which may be the frequency with which a WTRU should monitor for changes in the channel between the AP 170 and the WTRU by monitoring, e.g., the beacon from the AP 170. The monitor frequency could depend on, e.g., mobility patterns. A refresh freq field 1378, which may be the minimal frequency with which a WTRU should refresh its setting with the AP 170. The refresh frequency could depend on, e.g., mobility patterns.

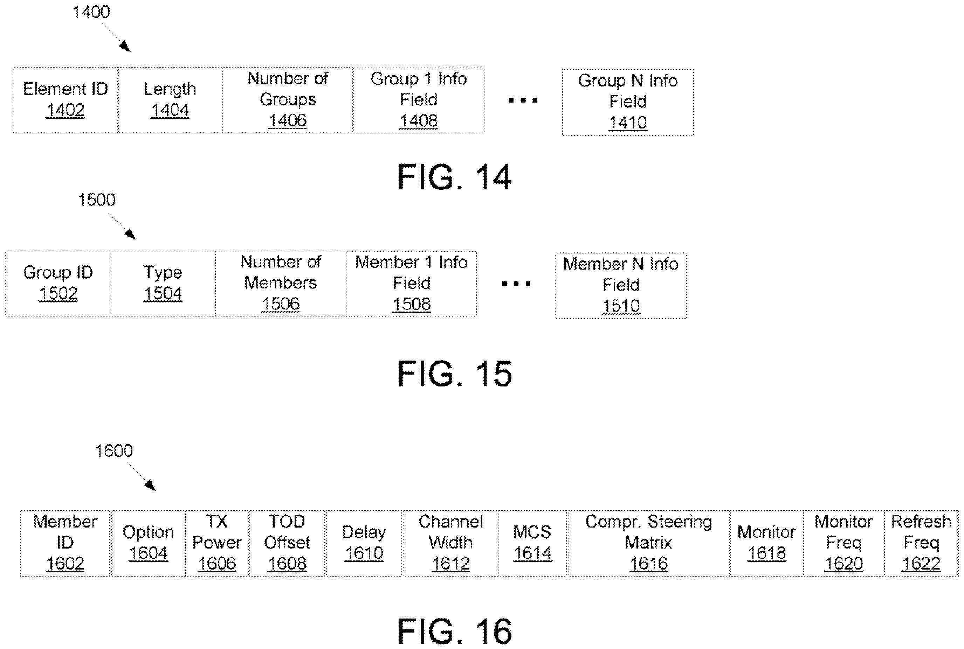

FIG. 14 schematically illustrates a broadcast UL MU-MIMO group management information element or field according to some disclosed embodiments. The broadcast UL MU-MIMO group management information element or field 1400 may be a field or an information element in some disclosed embodiments. The broadcast UL MU-MIMO group management information element 1400 may include one or more of the following fields: element ID 1402, length 1404, number of groups 1406, and group 1 information 1408 through group N information 1410 that may be based on a number N of number of groups field 1406. The element ID field 1402 may identify that the information element is a broadcast UL MU-MIMO information element 1400. The length field 1404 may be a length of the UL MU-MIMO information element 1400. The number of groups field 1406 may be the number of group info fields, such as N, included in the UL MU-MIMO information element 1400. The group 1 info field 1408 through group N info field 1410, may be the information with respect to respective groups 1 to N. An example format of a group info field is depicted in FIG. 15.

The AP 170 may manage one or more groups simultaneously by sending a broadcast frame including the broadcast UL MU-MIMO group management information element 1400, which may be a field.

FIG. 15 schematically illustrates a group info field according to some disclosed embodiments. The group info field 1500 may include the description of the members in each group and may include one or more of the following fields: group ID 1502, type 1504, number of members 1506, and member 1 information 1508 through member N information 1510. The group ID field 1502 may be the ID of the group. The type field 1504 may be a type of the group. The number of members 1506 may be a number of WTRUs that are members of the group. The member 1 info field 1508 through member N info field 1510 may be information regarding member WTRUs in the respective group. The order of the members in a group may be implicitly expressed by the order of the associated member info field 1508, 1510.

FIG. 16 schematically illustrates a member info field according to some disclosed embodiments. The member info field 1600 may include one or more of the following fields: member ID 1602, option 1604, TX power 1606, TOD offset 1608, delay 1610, channel width 1612, MCS 1614, compressed steering matrix 1616, monitor 1618, monitor frequency (freq) 1620, and refresh freq 1622. The member ID field 1602 may be the ID of a member WTRU which may be implemented as AID, MAC Address or other form of IDs that the AP 170 and the WTRU may use. The option field 1604 which indicate one or more additional fields that the member info field 1600 may include. The TX power field 1606 may be a transmit power a WTRU should use to transmit when conducting UL MU-MIMO transmissions in the current group. The delay field 1610 may be the delay that a WTRU may need to adjust for when participating in UL MU-MIMO transmissions to the AP 170 in the current group. The channel width field 1612 may be the channel width that a WTRU may use when participating in UL MU-MIMO transmissions to the AP 170 in the current group. The MCS field 1614 may be the MCS that a WTRU should adapt when participating in UL MU-MIMO transmissions to the AP 170 in the current group. The compressed steering matrix field 1616 may be a compressed steering matrix that a WTRU should adapt when participating in UL MU-MIMO transmissions to the AP 170 in the current group if this field is included as indicated by the option field 1604. The size of the steering matrix may be implicitly specified by the MCS 1614.

The monitor field 1618 may be one or a few bits to indicate whether a WTRU should monitor for channel changes between the AP 170 and the WTRU. The monitor frequency (freq) field 1620 may be the frequency with which a WTRU should monitor for changes in the channel between the AP 170 and the WTRU by monitoring, e.g., the beacon from the AP 170. The monitor frequency could depend on, e.g., mobility patterns. The refresh freq field 1622 may be the minimal frequency with which a WTRU should refresh its setting with the AP 170. The refresh frequency could depend on, e.g., mobility patterns.

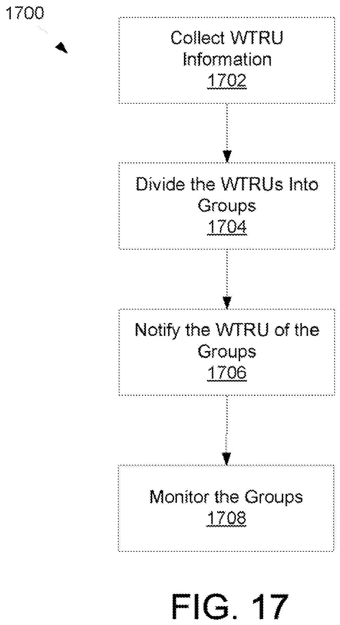

FIG. 17 schematically illustrates a method of managing UL MU-MIMO groups according to some disclosed embodiments. The method 1700 may begin with collecting WTRU information 1702. For example, the AP 170 may collect from WTRUs 102d, 102e, 102f, 102g the information necessary to divide the WTRUs 102d, 102e, 102f, 102g into UL MU-MIMO groups by following the grouping information acquisition methods described in association with FIG. 11, or other grouping information acquisition methods.

The method 1700 may continue with dividing the WTRUs into groups 1704. The AP 170 may divide the WTRUs 102d, 102e, 102f, 102g into UL MU-MIMO groups by following the group selection method disclosed in association with FIG. 12, or other group selection methods.

The method 1700 may continue with notifying each WTRU of the groups 1706. In some embodiments, the AP 170 sends a unicast frame to a particular WTRU 102d, 102e, 102f, 102g containing the unicast UL MU-MIMO group management information element or field 1300. The WTRU 102d, 102e, 102f, 102g may then know its group or groups. The WTRU 102d, 102e, 102f, 102g may then adjust its parameters as specified in the membership info field 1308, 1310, 1350, for the appropriate group when participating in the associated UL MU-MIMO group transmissions to the AP 170.

In some embodiments, the AP 170 sends a broadcast frame to all WTRUs 102d, 102e, 102f, 102g including the broadcast UL MU-MIMO group management information element or field 1400. The WTRUs 102d, 102e, 102f, 102g may then determine their group or groups. The WTRUs 102d, 102e, 102f, 102g can then adjust their parameters, which may be specified in the member info field 1308, 1310 in the appropriate group info field 1350 when participating in the associated UL MU-MIMO group transmissions with the AP 170.

In some embodiments, the method 1700 continues with monitor the group 1708. The AP 170 may monitor the channel between the AP 170 and the WTRUs 102d, 102e, 102f, 102g with a pre-defined frequency. The AP 170 may monitor communications from the WTRUs 102d, 102e, 102f, 102g for an indication from one or more WTRUs 102d, 102e, 102f, 102g that conditions have changed.

In some embodiments, once the UL MU-MIMO groups are formed by the AP 170, group maintenance can be performed due to changes in the environment such as interference, channel changes or due to changes at each of the member WTRUs 102d, 102e, 102f, 102g such as mobility, etc. The group maintenance can be performed by having the AP 170 and the WTRUs 102d, 102e, 102f, 102g conduct monitoring of the channel between them and regroup the WTRUs 102d, 102e, 102f, 102g to determine whether or not one or more groups should be reformed.

In some embodiments, the WTRUs 102d, 102e, 102f, 102g may monitor the channel between the AP 170 and the WTRUs 102d, 102e, 102f, 102g. In some embodiments, the WTRUs 102d, 102e, 102f, 102g may monitor the channel between the AP 170 and the WTRUs 102d, 102e, 102f, 102g based on whether or not the AP 170 indicates that the WTRUs 102d, 102e, 102f, 102g should monitor in the membership info field 1308, or in the membership info field 1508. For example, using the information in the UL MU-MIMO beamformee information element 1000, which may be included in a beacon frame, or PLCP header, the WTRUs 102d, 102e, 102f, 102g may estimate information such as channel state information, pathloss, TOD clock offset, propagation delay, etc. If the changes in the information have exceeded thresholds, which may be pre-defined, the WTRUs 102d, 102e, 102f, 102g may inform the AP 170 of the changes.

For example, if the TOD clock offset has been correctly adjusted by group management procedures, the TOD Clock may be assumed to be synchronized for a pre-defined interval, which may be the refresh interval = 1/refresh frequency. The WTRUs 102d, 102e, 102f, 102g may then simply monitor the propagation delay by calculating PDelay = $TOA_{STA}$ - $TOD_{AP}$ where $TOD_{AP}$ is included in the frame in the UL MU-MIMO beamformee information element or field 1000 and the $TOA_{STA}$ may be locally measured at the WTRU 102d, 102e, 102f, 102g when the frame containing the UL MU-MIMO beamformee information element or field 1000 arrives.

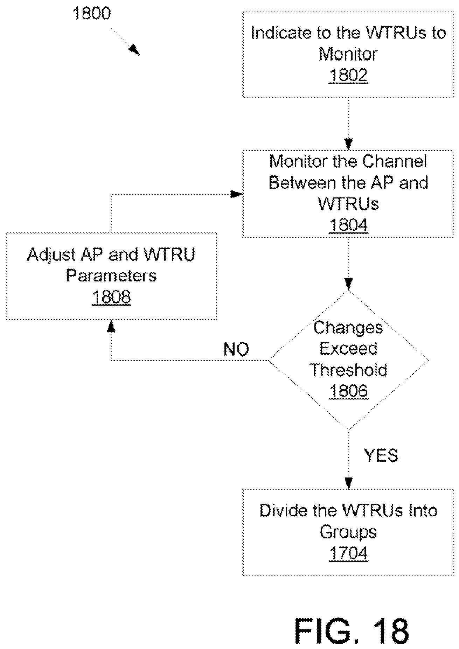

FIG. 18 schematically illustrates a method for group maintenance according to some disclosed embodiments. The method 1800 may optionally begin with indicate to the WTRUs to monitor 1802. For example, the AP 170 may indicate to the WTRUs 102d, 102e, 102f, 102g that they should monitor the channels between the AP 170 and the WTRUs 102d, 102e, 102f, 102g. For example, the WTRU 102d, 102e, 102f, 102g may estimate using the beacon frames parameters such as channel state information, path loss, TOD clock offset, propagation delay, etc. The WTRUs 102d, 102e, 102f, 102g may send this information to the AP 170 or may send information to the AP 170 when the information indicates that a value has changed greater than a threshold value, which may indicate that groups may need to be reformed. If a WTRU 102d, 102e, 102f, 102g detects that changes have exceeded one or more thresholds, then the WTRU 102d, 102e, 102f, 102g may relay the new information to the AP 170 using a frame containing the UL MU-MIMO beamformer information element or field 1050.

The method 1800 may continue with monitor the channel between the AP and the WTRUs 1802. For example, the AP 170 may monitor the channel between the AP 170 and the WTRUs 102d, 102e, 102f, 102g.

The method 1800 may continue to determine if changes exceed threshold 1806. For example, the AP 170 may determine whether or not changes have exceeded one or more thresholds, which may be pre-defined. The AP 170 may use information gathered from both the AP 170 and the WTRUs 102d, 102e, 102f, 102g.

If the changes do not exceed one or more thresholds, then the method 1800 may adjust AP and WTRU parameters 1808, as may be necessary, and return to monitoring 1804. If the changes do exceed one or more thresholds then the method 1800 may continue to divide the WTRUs 102d, 102e, 102f, 102g into groups. For example, the AP 170 may conduct regrouping according to a method disclosed herein. The AP 170 may perform regrouping using the new information from the WTRUs 102d, 102e, 102f, 102g using a group selection method disclosed herein, for example the method disclosed in association with FIG. 12, or another group selection method. Thus, the AP 170 may be configured to monitor the groups and perform a regrouping based on the conditions changing.

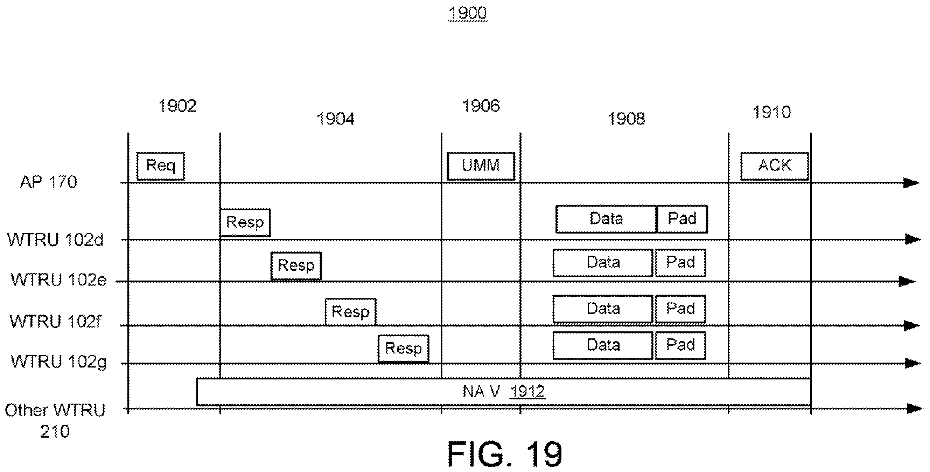

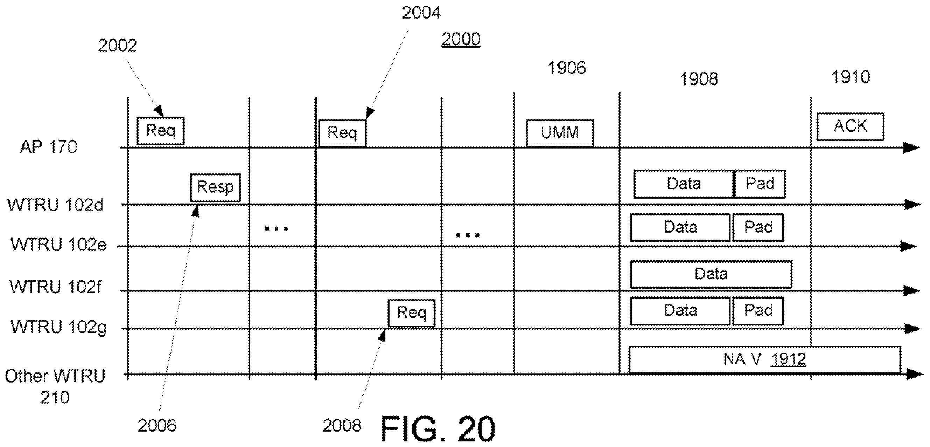

FIGS. 19 and 20 illustrate a frequency synchronization method for UL MU-MIMO transmissions according to some disclosed embodiments. Illustrated in FIG. 19 are an AP 170, WTRUs 102d, 102e, 102f, 102g, and other WTRUs 210, along a vertical axis, and portions of synchronization 1902, 1904, 1906, 1908, 1910 along a horizontal axis. In some embodiments, the method 1900 may be performed before UL MU-MIMO transmission 1908.

The method 1900 may begin with a Req packet 1902 sent from the AP 170 to the WTRUs 102d, 102e, 102f, 102g, WTRUs 210.

The method 1900 may continue with each UL MU-MIMO WTRUs 102d, 102e, 102f, 102g sending Resp packets 1904 using the estimated frequency offset included in the Req packet 1902 to compensate the frequency difference between AP 170 and WTRUs 102d, 102e, 102f, 102g. The Other WTRUs 210 may receive the Req packet 1902 and set a NAV 1912 accordingly.

The method 1900 may continue with the AP 170 broadcasting a UMM frame 1906. For example, once the AP 170 receives Resp packets from each of the WTRUs 102d, 102e, 102f, 102g, the AP 170 may estimate again the frequency offset for each WTRUs 102d, 102e, 102f, 102g, and then broadcast this information in the UMM frame 1906.

The method 1900 may continue with the WTRUs 102d, 102e, 102f, 102g performing UL MU-MIMO 1908. The WTRUs 102d, 102e, 102f, 102g may readjust their frequency offset based on the information in the UMM frame 1906 before performing UL MU-MIMO 1908.

Illustrated in FIG. 20 are an AP 170, WTRUs 102d, 102e, 102f, 102g, and other WTRUs 210, along a vertical axis, and portions of synchronization 2002, 2004, 2006, 2008, 1906, 1908, 1910 along a horizontal axis. In some embodiments, the method 2000 may be performed before UL MU-MIMO transmission 1908. In the embodiment, of FIG. 20, the Req frame 2002 may be sent to WTRU 102d, and then WTRU 102d may respond with Resp frame 2006. This may continue in a sequential fashion with the AP 170 finally sending a Req frame 2004 to WTRU 102g and WTRU 102g responding with a Resp frame 2008.

In some embodiments, when a WTRU 102d, 102e, 102f, 102g receives a UMM frame 1906 with a group ID for which the MembershipStatusInGroupID[k] (see Table 3) is equal to 1, which may indicate the WTRU 102d, 102e, 102f, 102g belongs to the group, the WTRU 102d, 102e, 102f, 102g may examine the UserPositionInGroupID (see Table 3) and find the corresponding WTRU 102d, 102e, 102f, 102g specific profile and prepare for the UL MU-MIMO transmission accordingly. The WTRUs 102d, 102e, 102f, 102g may temporarily suspend Clear Channel Assessment until the end of UL MU-MIMO transmission. The ACK frame may be transmitted from AP 170 to WTRUs 102d, 102e, 102f, 102g.

In some embodiments, frequency offset can be estimated by STF and LTF and tracking by pilots. In some embodiments, the UL MU-MIMO frames from more than one WTRU 102d, 102e, 102f, 102g may arrive at the AP 170 simultaneously. If different WTRUs 102d, 102e, 102f, 102g frames have different frequency offset, which may occur without a frequency synchronization scheme, the AP 170 have difficulty in detecting and decoding the WTRUs 102d, 102e, 102f, 102g frames.

In some embodiments, the AP 170 may use a long guard interval for UL MU-MIMO transmission, when the combination of timing difference due to UL MU-MIMO WTRUs 102d, 102e, 102f, 102g and delay due to multi-path channel are larger than a guard interval of an OFDM system of the AP 170. In some embodiments, the AP 170 may be configured to estimate the round trip delay for WTRUs 102d, 102e, 102f, 102g and broadcast this information in the UMM frame 1906. WTRUs 102d, 102e, 102f, 102g may be configured to adjust the transmission time accordingly such that frames 1908 from all the UL MU-MIMO WTRUs 102d, 102e, 102f, 102g arrive at the AP 170 within the guard interval.

In some embodiments, the AP 170 records the transmission time of packet Req 1902 as t0. Then Resp frames 1904 are transmitted sequentially from MU-MIMO WTRUs 102d, 102e, 102f, 102g to the AP 170. In some embodiments, the transmission of Resp frames 1904 may be aligned with the AP 170 instead of aligning with the end of previous Resp frames 1904. For example, the end of the Resp 1904 by WTRU 102d may be determined by WTRU 102e and WTRU 102e may then send a Resp 1904. For example, if WTRU 102e may transmit Resp 1904 at the time t1+ 2*SIFS (Short Inter-Frame Space) + duration(Resp 1904 of WTRU 102d), where t1 may be the time WTRU 102e receives the Req frame 1902 from the AP 170, and duration of Resp 1904 of WTRU 102d may be calculated according to the SIG field of Resp 1904 of WTRU 102d. In this way, AP 170 may be able to compare the receive time of each Resp 1904 of WTRUs 102d, 102e, 102f, 102g and t0 to calculate the round trip delay for each WTRUs 102d, 102e, 102f, 102g.

In some embodiments, power may be controlled for the WTRUs 102d, 102e, 102f, 102g, and AP 170 as follows. The WTRUs 102d, 102e, 102f, 102g may include their transmit power in the Resp frame 1904. The AP 170 may measure the received RSSI according to Resp frames 1904 of the WTRUs 102d, 102e, 102f, 102g. According to the measured RSSI, and reported transmit power, the AP 170 may determine whether the WTRUs 102d, 102e, 102f, 102g should increase or reduce transmit power, and how much the WTRUs 102d, 102e, 102f, 102g should adjust the transmit power. The AP 170 may redefine the UL MU-MIMO group when power alignment cannot be met with the current group of WTRUs 102d, 102e, 102f, 102g, or another grouping strategy maybe applied.

Uplink WTRUs 102d, 102e, 102f, 102g power control may only apply to UL MU-MIMO frames 1908 and WTRUs 102d, 102e, 102f, 102g. Other WTRUs 210 may receive Req 1902 Resp 1904, and UMM 1906 with normal transmit power and set their NAV accordingly. The WTRUs 102d, 102e, 102f, 102g may send UL MU-MIMO frames 1908 using the power assigned by AP 170, or in some embodiments part of the UL MU-MIMO frame 1908 may be transmitted using the power assigned by the AP 170. In some embodiments, the mixed mode PPDU 500 (FIG. 5) may be used for UL MU-MIMO transmission, with the legacy portion of the preamble 502, 504, 506, 508, 510, sent with normal power, and the MU preamble 512, 514, 516 send with power assigned by the AP 170. In this way, other WTRUs 210 surrounding the UL MU-MIMO WTRUs 102d, 102e, 102f, 102g, which may not receive frames from the AP 170, may receive the UL MU-MIMO frame 1908 and set NAV.

In some embodiments, MAC signaling and uplink transmission control may be configured for DL and UL MU-MIMO transmissions according to devices and methods disclosed herein. MAC Layer designs may be configured to performed methods that enable standalone UL MU-MIMO transmission and combined DL/UL MU-MIMO transmissions according to the methods disclosed herein. In some embodiments, the MAC layer is configured to perform time/frequency synchronization, uplink power control and antenna calibration according to the method disclosed herein. In some embodiments, the message exchange before the UL MU-MIMO traffic is used by the AP 170 and WTRUs 102d, 102e, 102f, 102g to sound the channel and transmit necessary control information.

In some embodiments, UL MU-MIMO WTRUs 102d, 102e, 102f, 102g may be equipped with more than one antenna. In some embodiments, several MIMO schemes may be used by the WTRUs 102d, 102e, 102f, 102g. For example, beamforming scheme, cyclic shift diversity (CSD) scheme, STBC scheme, spatial multiplexing, or precoding. In some embodiments, the MIMO schemes may be determined by the WTRUs 102d, 102e, 102f, 102g and be transparent to AP 170. For example, beamforming or CSD. In this scenario, WTRUs 102d, 102e, 102f, 102g may apply the same MIMO methods to all the regular sounding frames exchanged and negotiated before the UL MU-MIMO session. For some MIMO technologies, the AP 170 may indicate to WTRUs 102d, 102e, 102f, 102g which MIMO technology may be used for the following UL MU-MIMO transmission in a UMM frame or other management frame. For a precoding method, the AP 170 may set a precoding matrix for WTRUs 102d, 102e, 102f, 102g as well. In some embodiments, the WTRUs 102d, 102e, 102f, 102g in the same UL MU-MIMO transmission session may utilize different MIMO technologies. For example, WTRU 102d may utilize STBC, while WTRU 102e may utilize beamforming.

In some embodiments, when multiple antennas are available at one or more WTRUs 102d, 102e, 102f, 102g and if enough degrees of freedom are not available at the AP 170, the AP 170 may instruct that WTRUs 102d, 102e, 102f, 102g do CSD or beamforming with dominant Eigen- mode. WTRUs 102d, 102e, 102f, 102g may use potentially higher modulation by doing so. When the AP 170 and WTRUs 102d, 102e, 102f, 102g both have more antennas available, one or more WTRUs 102d, 102e, 102f, 102g may use spatial multiplexing, which may enable more data to be sent by the WTRUs 102d, 102e, 102f, 102g. The MIMO modes may be dynamic, and the AP 170 may be configured with a scheduler to monitor the current MIMO and change MIMO methods being used which may increase the data rate.

Table 3 illustrates an example of fields that may be included in an uplink MU-MIMO management (UMM) frame 1906.

| Table 3 | | |
|---|---|---|
| Field | | Description |
| BW | | Bandwidth for UL MU-MIMO transmission |
| Uplink Group ID | | Contains Membership Status Array, User Position Array, etc. |
| Short GI | | Whether short GI is utilized for UL MU-MIMO transmission |
| User Specific Profile | MCS | MCS used for the WTRU |
| | Nsts | # of space time stream used for the WTRU |
| | Length | Length of data A-MPDU pre-EOF padding in PSDU in units of 4 octets |
| | Padding | # of pad bits used for the WTRU |
| | Power adj | Power adjustment for the WTRU |
| | Freq adj | Frequency adjustment for the WTRU |
| | STBC | Whether STBC is utilized |
| | Coding | BCC or LDPC |
| | Precoding Matrices | Optional |

Uplink group ID may be for a UL MU-MIMO transmission group ID. Uplink (UL) group ID may be similar to group ID defined in IEEE 802.11ac for DL MU-MIMO transmission. In some embodiments, assignment of uplink group ID or a change to the uplink group ID may be performed using a group ID management frame, which may include a membership status array and user position array. In some embodiments, transmission of a group ID management frame may be complete before the transmission of an MU PPDU either in DL or UL. UL group ID may not be the same as group ID for DL MU-MIMO transmission. In some embodiments, each WTRU 102d, 102e, 102f, 102g may maintain a parameter UL-GROUP_ID, which may be maintained in a PHYCONFIG_VECTOR field.

In some embodiments, a MU-MIMO calibration method for standalone UL MU-MIMO transmissions may be performed. An AP 170 with multiple antennas may calibrate for differences between its own multiple RX/TX antennas. In some embodiments, the calibration may improve performance. The AP 170 may be configured to calibrate when beamforming or when MU-MIMO methods are used. A method of calibration may estimate the correction matrices used for beamforming, so that they can be utilized at a transmitter side. One purpose of the method of calibration is to make sure that the downlink and uplink channels are reciprocal. Correlation matrices may be diagonal matrices, which could be per-subcarrier based.

With UL MU-MIMO, the calibration for differences between multiple UL MU-MIMO WTRU 102d, 102e, 102f, 102g may be performed. In this embodiment, a method of calibration may include the following steps. The method may begin with a Req frame may be transmitted by the AP 170 with regular round PPDU format. The method may continue with the AP 170 may transmit a Req frame with or without a correction matrix. Each of the WTRUs 102d, 102e, 102f, 102g may respond with a sounding packet, which may be a Resp frame, containing DL channel estimations from previous Req frames from the AP 170. The method may continue with the AP collecting both DL and UL channel estimations for each WTRUs 102d, 102e, 102f, 102g. The AP 170 may calculate one set of correction matrices for AP 170, and one sets of correction matrices for the WTRUs 102d, 102e, 102f, 102g. The correction matrices may be per subcarrier based, or per every other subcarrier based, or the resolution could be even finer than subcarrier. The method may continue with the AP 170 transmits the correction coefficients for each WTRUs 102d, 102e, 102f, 102g in a UMM frame. The method may end with the WTRUs 102d, 102e, 102f, 102g using the correction coefficients.

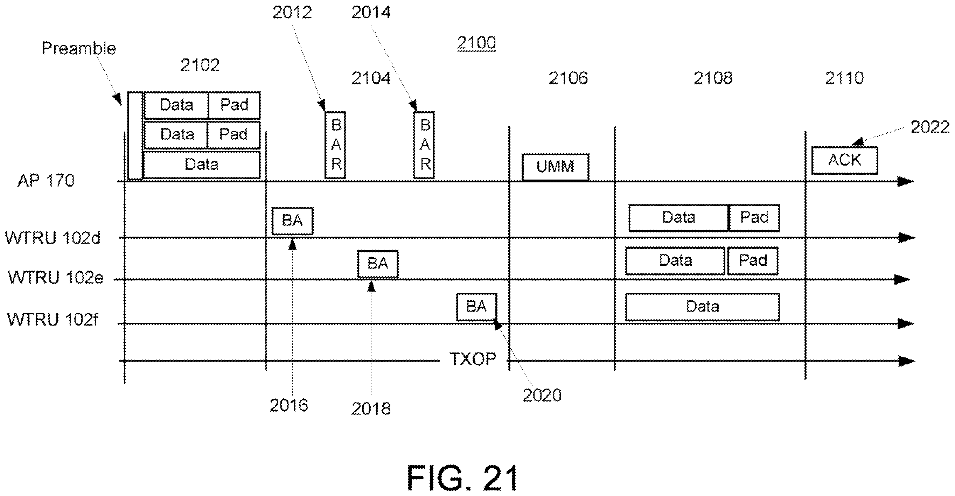

FIG. 21 schematically illustrates combined DL/UL MU-MIMO transmissions according to some disclosed embodiments. Illustrated in FIG. 21 is DL MU-MIMO transmission 2102, ack traffic indication, power report, calibration, 2104, UMM 2106, UL MU-MIMO transmission 2108, ack 2110, block-ACK request (BAR) 2012, 2014, block-ACK (BA) 2016, 2018, 2020, and AP 170, and WTRUs 102d, 102e, 102f.

The BA frame 2016, 2018, 2020 may be a modified version of a BA 2016, 2018, 2020 frame defined in the IEEE 802.11 specifications. BA frame 2016, 2018, 2020 may be transmitted with regular sounding PPDU format from each WTRUs 102d, 102e, 102f to AP 170 sequentially. The AP 170 may use the BA frames 2016, 2018, 2020 for uplink channel sounding, and the AP 170 may determine receive spatial division multiple access (SDMA) weights accordingly. The BA frames 2016, 2018, 2020 may include the following information: uplink traffic indication, transmit power, calibration information, according to embodiments disclosed herein. In some embodiments, the BA frames 2016, 2018, 2020 may be transmitted with UL MU-MIMO if grouping information has been determined and is still valid.

The UL MU-MIMO Management frame (UMM) 2106 may be transmitted from the AP 170 to the WTRUs 102d, 102e, 102f. The AP 170 may refine the UL MU-MIMO groups and redefine the group ID with the UMM 2106 according to the feedback from the BA frames 2016, 2018, 2020 and grouping strategy. The AP 170 may assign each UL MU-MIMO WTRU 102d, 102e, 102f uplink MCS, necessary padding bits, LTF/STF transmission, etc. Information about timing, frequency, power adjustments and calibration may be transmitted by the AP 170 in the UMM 2106.

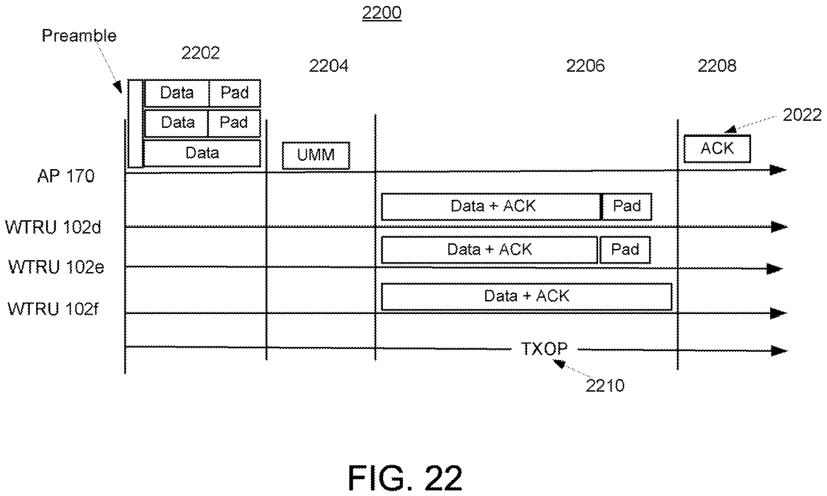

The ACK frame 2022 may be transmitted sequentially to multiple WTRUs 102d, 102e, 102f or it can be transmitted with DL MU-MIMO. The MAC layer may be configured to perform methods according to FIGS. 21 and 22 for combined DL/UL MU-MIMO transmissions.

FIG. 22 schematically illustrates combined DL/UL MU-MIMO transmissions according to some disclosed embodiments. Illustrated in FIG. 22 is DL MU-MIMO transmission 2202, UMM 2104, UL MU-MIMO transmission 2106, ack 2108, AP 170, and WTRUs 102d, 102e, 102f.

The method may include Ack or BA information, expected by the AP 170 in response to a DL MU-MIMO transmission 2202, within a subsequent UL MU-MIMO transmission 2206. The packets may all be sent during an initial DL transmission contention free period or TXOP 2210. The Ack or BA information can be placed within the shortened SIG field according to embodiments disclosed herein. The method disclosed in FIG. 22 may eliminate the ACK or BA frame and Distributed Interframe Space (DIFS) durations.

In some embodiments, a method for frequency synchronization for combined DL/UL MU-MIMO transmissions may be used. A multi-stage frequency synchronization may be applied.

During DL MU-MIMO transmission, Carrier-Frequency Offset (CFO) may be estimated at each of the WTRUs 102d, 102e, 102f, 102g. The WTRUs 102d, 102e, 102f, 102g may then apply the estimated CFO to the BA transmission in FIG. 21. The AP 170 can estimate the residual CFO for each WTRUs 102d, 102e, 102f again when it receives the sequentially transmitted BAs 2016, 2018, 2020, and broadcast this information in UMM 2106. The WTRUs 102d, 102e, 102f, 102g may then adjust the CFO accordingly.

In some embodiments a method for timing synchronization for combined DL/UL MU-MIMO transmissions may be used. The AP 170 may estimate the round trip delay for each WTRU 102d, 102e, 102f, 102g and broadcast this information in a UMM. The WTRUs 102d, 102e, 102f, 102g may adjust the timing offset for UL MU-MIMO transmission accordingly. In some embodiments, the AP 170 records the time it starts transmitting the DL MU-MIMO session. The AP 170 may perform start-of-packet detection on the first BA packet. The AP 170 may compare the recorded time and the detected time to estimate the round trip delay for the first WTRU 102d, 102e, 102f, 102g. Similarly, the AP 170 may calculate the time difference between BAR and BA to estimate the round trip delay for one or more other WTRUs 102d, 102e, 102f, 102g.

In some embodiments, a method of power control for combined DL/UL MU-MIMO transmissions may be used. Each WTRU 102d, 102e, 102f, 102g may report its own transmit power to the AP 170 in a BA packet. The AP 170 may measure the received RSSI according to the BA frames for each WTRU 102d, 102e, 102f, 102g. The WTRU 102d, 102e, 102f, 102g may periodically report power headroom to the AP 170. According to the measured RSSI, and reported transmit power, and power headroom available at WTRU 102d, 102e, 102f, 102g, the AP 170 may determine whether the WTRU 102d, 102e, 102f, 102g should increase or reduce transmit power, and may determine how much the WTRU 102d, 102e, 102f, 102g should adjust the transmit power. The AP 170 may redefine the UL MU-MIMO group when power alignment cannot be met with the current group of WTRU 102d, 102e, 102f, 102g. In some embodiments, the AP 170 may use another grouping strategy. Uplink user power control may only apply to UL MU-MIMO frames. Other WTRU 210 may receive UMM with normal transmit power and set NAV accordingly. The WTRU 102d, 102e, 102f, 102g may send the UL MU-MIMO frame using the power assigned by AP 170. In some embodiments, the WTRU 102d, 102e, 102f, 102g may send a portion of the UL MU-MIMO frame using the assigned power. In some embodiments, the mixed mode PPDU 500 (FIG. 5) may be used for UL MU-MIMO transmission, with the legacy portion of the preamble 502, 504, 506, 508, 510, sent with normal power, and the MU preamble 512, 514, 516 send with power assigned by the AP 170. In this way, other WTRUs 210 surrounding the UL MU-MIMO WTRUs 102d, 102e, 102f, 102g, which may not receive frames from the AP 170, may receive the UL MU-MIMO frame and set their NAV accordingly.

In some embodiments a method for MU-MIMO calibration for combined DL/UL MU-MIMO transmissions may be used. A calibration method according to a method disclosed herein may be used for MU-MIMO transmissions. In some embodiments, MU-MIMO calibration is performed before the combined DL/UL MU-MIMO session, and calibration may be used according to methods disclosed herein.

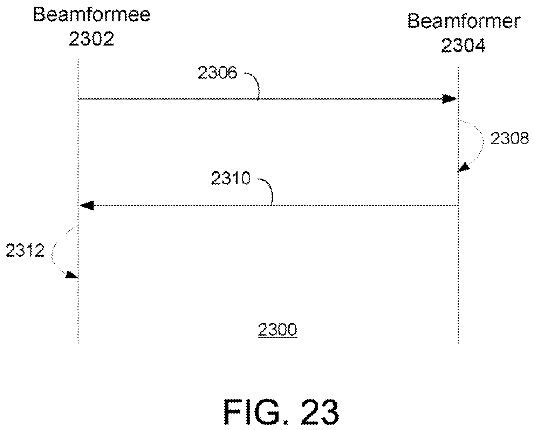

FIG. 23 illustrates a method of timing synchronization according to some disclosed embodiments. A TOD clock offset and propagation delay estimation may be determined. FIG. 23 illustrates a beamformee 2302 and a beamformer 2304. The beamformee 2302 and a beamformer 2304 may be an AP 170 or a WTRU 102d, 102e, 102f, 102g. The method 2300 may begin with the UL MU-MIMO beamformee 2302 transmitting a broadcast or unicast frame 2306 which may include a UL MU-MIMO beamformee information element which indicates the time of departure (TOD) time stamp of the frame 2306. The frame 2306 may be meant to conduct synchronization only by including only the TODAP time stamp, or the frame 2306 may incorporate other information such as Tx Power used to facilitate Transmit Power Control, etc.

The method 2300 may continue at 2308 with the UL MU-MIMO beamformer may measure the (time of arrival) TOA of the frame from the UL MU-MIMO beamformee containing the TOD timestamp and calculate the difference in the TOA and TOD time difference $T1 = TOA_{STA} - TODAP$ (alternatively $T1 = TOA_{AP} - TOD_{WTRU}$.)

In some embodiments, IEEE 802.11v offers an optional feature of location and timing synchronization. This feature utilizes a new time of departure (TOD) clock which has higher frequency than the standard Time Synchronization Function (TSF) timer. For example, the TOD clock could have a timing unit of 10ns. In some embodiments, the TOD clock or the TSF timer may be used.

The method 2300 may continue at 2310 with the UL MU-MIMO beamformer providing timing feedback to the beamformee by transmitting a frame containing the UL MU-MIMO beamformer information element. In some embodiments, the frame containing the UL MU-MIMO beamformer information element includes the option of the T1 feedback and the TOD which is the timestamp of the TOD of the frame departing from the UL MU-MIMO beamformer.

The method may continue at 2312 with the UL MU-MIMO beamformee 2302 measuring the TOA of the frame containing the UL MU-MIMO beamformer information element containing the TOD. Using the information obtained from the UL MU-MIMO beamformee initiated process, the UL MU-MIMO beamformee 2302 may determine the propagation delay and TOD clock offset by the following methods.

The propagation delay between the UL MU-MIMO beamformee 2302 and UL MU-MIMO beamformer 2304 may be determined using $PDelay = (T1 + (TOA_{AP} - TOD_{WTRU})) / 2$ (or $(T1 + (TOA_{WTRU} - TOD_{AP})) / 2$), where T1, $TOD_{WTRU}$ ($TOD_{AP}$) can be obtained from the UL MU-MIMO beamformer IE and the $TOAAP$ ($TOA_{WTRU}$) can be measured at the AP using the TOD clock.

The propagation delay between the UL MU-MIMO beamformee may be determined using $C\_Offset = (T1 - (TOA_{AP} - TOD_{WTRU}))/2$ (or $TOA_{WTRU} - TOD_{AP}$), where T1, $TOD_{WTRU}$ ($TOD_{AP}$) can be obtained from the UL MU-MIMO beamformer IE and the TOAAP (TOA$_{WTRU}$) may be measured at the AP (or WTRU) using the TOD clock. The beamformee 2302 may then have determined the propagation delay.

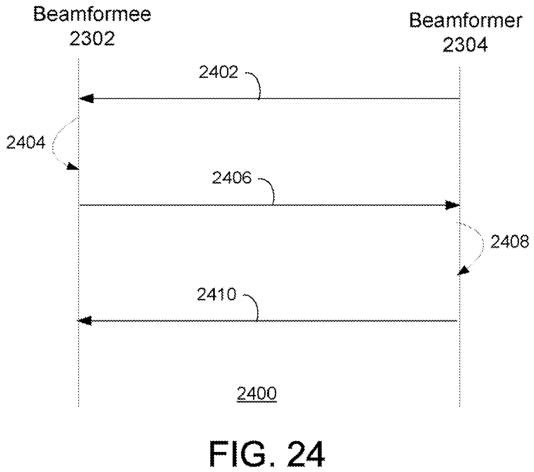

FIG. 24 illustrates a method of timing synchronization according to some disclosed embodiments. A TOD clock offset and propagation delay estimation may be determined. FIG. 24 illustrates a beamformee 2302 and a beamformer 2304. The beamformee 2302 and a beamformer 2304 may be an AP 170 or a WTRU 102d, 102e, 102f, 102g.

The method 2400 may begin with a UL MU-MIMO beamformer 2304 initiating a propagation delay and TOD clock offset process by transmitting a broadcast or unicast frame which may include a UL MU-MIMO beamformer information element which indicates the TOD time stamp of the frame 2402, TOD$_{WTRU}$ (or TOD$_{AP}$). This frame 2402 may be meant to conduct synchronization only by including only the TOD$_{WTRU}$ (or TOD$_{AP}$) time stamp. In some embodiments, the frame 2402 may include other information such as Tx Power used to facilitate Transmit Power Control, etc.

The method 2400 may continue at 2404 with the UL MU-MIMO beamformee 2302 measuring the TOD$_{WTRU}$ (or TOD$_{AP}$) of the frame 2404 from the UL MU-MIMO beamformer 2304 containing the TOD timestamp, and the beamformee 2302 may determine the difference in the TOA and TOD time difference T2 = TOA$_{AP}$ - TOD$_{WTRU}$ (or TOA$_{AP}$ - TOD$_{WTRU}$).

The method 2400 may continue at 2406 with the UL MU-MIMO beamformee 2302 providing timing feedback to the UL MU-MIMO beamformer by transmitting a frame 2406 containing the UL MU-MIMO beamformee information element. The UL MU-MIMO beamformee information element may include the option of the T2 feedback and the TOD$_{AP}$ which is the timestamp of the TOD of the frame departing from the UL MU-MIMO Beamformee 2302.

The method 2400 may continue at 2408 with the UL MU-MIMO beamformer 2304 measuring the TOA$_{WTRU}$ (TOAAP) of the frame 2406 containing the UL MU-MIMO beamformee information element containing the TOD$_{AP}$ (TOD$_{WTRU}$). The UL MU-MIMO beamformer 2304 may then calculate T1 = TOA$_{WTRU}$ - TOD$_{AP}$ (or TOA$_{AP}$ - TOD$_{WTRU}$) and determine PDelay = (T1 + T2)/2 and C_Offset = (T1 - T2)/2.

The method 2400 may continue at 2410 with the UL MU-MIMO beamformer 2304 then adjusting the TOD clock using C_Offset and sending a frame 2410 containing the UL MU-MIMO beamformer information element including the T1 feedback and/or PDelay and/or TOD C_Offset. The UL MU-MIMO beamformer may send frame 2410 according to options indicated in the UL MU-MIMO beamformer information element. The method 2400 may then end.

In some embodiments, a method for synchronization using the TOD clock and TSF timer may be used. In some embodiments, the TSF timer and the TOD Clock may be used together for a more precise timing. For example, if the AP 170 requests that the WTRU 102d, 102e, 102f, 102g start transmitting their UL MU-MIMO packets after Short Inter-Frame Space (SIFS) time counting from the end of the req frame, the nanosecond (ns) portion of the TOD clock timestamp of the end of the req frame may be used in combination with the TSF timer timestamp. The UL MU-MIMO transmission may then be started after SIFS period has elapsed according to the TSF timer as well as the TOD clock. For example, if the req frame ends at a fraction of a microsecond, say 101.52 microsecond, the WTRU 102d, 102e, 102f, 102g should start UL transmission after the TSF timer reaches 101 + SIFS and the ns portion of the TOD clock reaches 520 ns. Propagation delay may also be adjusted and will be discussed below. Optionally, the WTRU 102d, 102e, 102f, 102g can also use the TOD clock for MAC layer timing.

In some embodiments a method of refresh and monitoring may be performed according to some disclosed embodiments. The TOD Clock at the AP 170 and the WTRU 102d, 102e, 102f, 102g may become unsynchronized due to TOD Clock drift. The propagation delay can change as well due to the physical movement of the AP 170 or WTRUs' 102d, 102e, 102f, 102g, or due to changes in the environment, etc. The AP 170 and the WTRUs 102d, 102e, 102f, 102g may be configured to perform periodic refresh of the TOD clock offset and propagation delay estimation as well as monitoring of these parameters in order to maintain these parameters up-to-date.

In some embodiments, after a UL MU-MIMO beamformee initiated TOD clock offset and propagation delay Estimation method, the AP 170 may relay information such as C_Offset and PDelay to the WTRUs 102d, 102e, 102f, 102g using a unicast frame containing the Unicast UL MU-MIMO group management information element or a broadcast frame containing the broadcast UL MU-MIMO group management information element. The AP 170 may also determine a refresh rate for the WTRUs 102d, 102e, 102f, 102g based on the TOD C_offset and PDelay changing rate. The exact refresh rate may depend on the tolerance of the AP 170 for UL MU-MIMO transmissions and factors such as TOD clock drift and mobility patterns of the WTRUs 102d, 102e, 102f, 102g and the AP 170. In some embodiments, at every refresh interval, the AP 170 may initiate the UL MU-MIMO beamformee initiated TOD clock offset and propagation delay estimation method.

In some embodiments, after a UL MU-MIMO beamformer initiated TOD clock offset and propagation delay estimation method, the WTRUs 102d, 102e, 102f, 102g may relay information such as C_Offset and PDelay to the AP 170 using a frame containing the UL MU-MIMO beamformer information element. The AP 170 may determine a refresh rate for the WTRUs 102d, 102e, 102f, 102g based on the TOD C_offset and PDelay changing rate. The AP 170 may then inform the WTRUs 102d, 102e, 102f, 102g of such refresh frequency using a unicast frame containing the unicast UL MU-MIMO group management information element or a broadcast frame containing the broadcast UL MU-MIMO beamformee group management information element. In some embodiments, at every refresh interval, the AP may choose to initiate the UL MU-MIMO beamformee initiated TOD clock offset and propagation delay estimation method. The AP 170 may choose to have the WTRUs 102d, 102e, 102f, 102g initiate the UL MU-MIMO beamformer initiated TOD clock offset and propagation delay estimation process.

The WTRUs 102d, 102e, 102f, 102g may monitor channel conditions and propagation delay between the AP 170 and itself. The WTRUs 102d, 102e, 102f, 102g may monitor beacons of the AP 170. Since a beacon may include the UL MU-MIMO beamformee information element containing the $TOD_{AP}$ timestamp of the beacon, the WTRUs 102d, 102e, 102f, 102g may determine T1 = $TOA_{WTRU}$- $TOD_{AP}$. Since the TOD clocks at the AP 170 and at the WTRUs 102d, 102e, 102f, 102g may have been adjusted for offset, T1 mostly is an expression of the propagation delay. If the newly measured propagation delay has changed compared to the previously recorded value by some threshold, which may be pre-defined, the WTRUs 102d, 102e, 102f, 102g may inform the AP 170 of such change by sending a frame to the AP 170 including the newly acquired PDelay information in a UL MU-MIMO beamformer information element. The AP 170 may conduct regrouping if necessary. In some embodiments the method of refresh and monitoring may end.

In some embodiments, a method of UL MU-MIMO transmission/reception synchronization coordination may be performed. When a UL MU-MIMO group concurrently transmits their packets to the AP 170, these frames may need to arrive within a GI at the AP 170 for the AP 170 to be able to process the frames, which may be challenging due to different propagation delays of the WTRUs 102d, 102e, 102f, 102g. The TOD and TSF clocks may be synchronized using the methods described herein. The propagation delay can be adjusted using the following two methods.

In some embodiments, a first method of adjusting for propagation delay in pre-defined and managed UL MU-MIMO groups may be performed. Some WTRUs 102d, 102e, 102f, 102g may have been grouped and managed using the grouping and the group management procedures disclosed herein, or another method may have been used. For the formed UL MU-MIMO groups, the AP 170 may have already estimated propagation delay and provided to the WTRUs 102d, 102e, 102f, 102g information such as delays that the WTRUs 102d, 102e, 102f, 102g may use to adjust for in UL MU-MIMO transmissions using a unicast or broadcast UL MU-MIMO group management information element. For example, if a UL MU-MIMO group of WTRUs 102d, 102e, 102f, 102g have the following round trip propagation delays, 1) WTRU 102d: 50 ns; 2) WTRU 102e: 100 ns; 3) WTRU 102f: 150 ns; 4) WTRU 102g: 200 ns, the AP 170 may determine the following delays for the group of the WTRUs 102d, 102e, 102f, 102g: 1) WTRU 102d: 75 ns; 2) WTRU 102e: 25ns; 3) WTRU 102f: -25 ns; 4) WTRU 102g: -75ns. The WTRUs 102d, 102e, 102f, 102g may start their UL MU-MIMO transmission by adjusting the SIFS period with the assigned delay values using any subset of the combination of the TSF timer and the TOD clock. In some embodiments, the WTRUs 102d, 102e, 102f, 102g may start their UL MU-MIMO transmission by adjusting an Inter Frame Spacing or interval with the assigned delay values using any subset of the combination of the TSF timer and the TOD clock. The WTRUs 102d, 102e, 102f, 102g in the UL MU-MIMO group may monitor the channel conditions and propagation delays and inform the AP 170 of changes as described herein, or using another method.

In some embodiments, a second method of adjusting for propagation delay in pre-defined and managed UL MU-MIMO groups may be performed. A group of WTRUs 102d, 102e, 102f, 102g may be grouped in an ad hoc manner without pre-arranging them into a group. The WTRUs 102d, 102e, 102f, 102g may have already conducted the TOD Clock Offset and Propagation Delay estimation with the AP 170. The AP 170 may indicate that the ad hoc grouped WTRUs 102d, 102e, 102f, 102g should start their UL MU-MIMO transmission using a req frame. The AP 170 may include in the req frame a delay value for each WTRUs 102d, 102e, 102f, 102g. The delay value may be determined based on propagation delay similarly as described in the first method disclosed above. The WTRUs 102d, 102e, 102f, 102g may adjust the SIFS period with the assigned delay values using a subset of the combination of the TSF timer and the TOD clock.

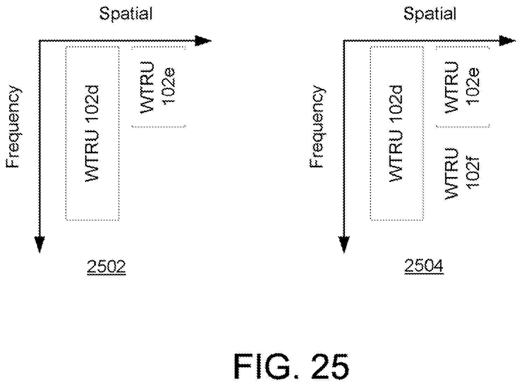

FIG. 25 schematically illustrates transmission for UL MU-MIMO with unequal bandwidth according to some disclosed embodiments. Illustrated in FIG. 25 at 2502 is WTRU 102d and WTRU 102e transmitting with a portion of the frequency unused when WTRU 102e is transmitting. The method for MU-MIMO grouping may group WTRUs with unequal bandwidth together for performing UL MU-MIMO when WTRUs within one BSS operate with different bandwidths. For example, in FIG. 25 at 2504 is WTRU 102d, WTRU 102e, WTRU 102f are transmitting with the unused portion of the frequency from 2502 being used by WTRU 102f, where WTRU 102e and WTRU 102f have been grouped together for transmitting.

The method of grouping may group transmitting UL MU-MIMO with unequal bandwidth together which may result in a more efficient utilization of uplink resources. The following are typical examples for UL MU-MIMO using unequal bandwidth: a group of WTRUs with unbalanced traffic payload, a group of STAs with different QoS requirements, a group of WTRUs with different channel conditions, and WTRUs which support different channel bandwidth capabilities.

In some embodiments a method for an AP to group WTRUs together with unequal bandwidth may base the grouping on one or more of the following. The grouping method for MU-MIMO may be based on information pertaining to the operational bandwidth of each WTRU. The method for MU-MIMO grouping may be based on the maximum transmit power for one or more of the WTRUs operating on a different bandwidths. The method for MU-MIMO grouping may use power control methods, and may base the grouping on the bandwidth that is used for transmission by the WTRUs.

The method for MU-MIMO grouping may designate that WTRUs operating on different channel bandwidth use a primary channel with the same bandwidth. The method for MU-MIMO may designate the primary channel to be the smallest channel bandwidth available between grouped WTRUs using UL MU-MIMO. The method for MU-MIMO grouping may designate a portion of the primary channel to be used by WTRUs grouped together for UL MU-MIMO. For example, if WTRU 102d supports a 20MHz primary channel, and WTRU 102e supports a 5MHz primary channel, the central 5 MHz bandwidth of the primary channel of both WTRUs 102d and WTRU 102e may be used for UL MU-MIMO operation. The method for MU-MIMO may designate an alternate shared channel for transmission of management frame and other control information.

The method for MU-MIMO grouping may indicate that control frames, including req, resp and UMM may be transmitted on the primary channel, with, or without, repetition on the non-primary channels depending on whether NAV is required to be set by WTRUs. The User Position Array defined in the GroupID Management Frame may indicate not only the user position in spatial domain, but also the user position in frequency domain. The BW field conveyed in UMM frame may indicate the bandwidth of the WTRU.

Although the features and elements of the present invention are described in the preferred embodiments in particular combinations, each feature or element can be used alone without the other features and elements of the preferred embodiments or in various combinations with or without other features and elements of the present invention. Although the solutions described herein consider 802.11 specific protocols, it is understood that the solutions described herein are not restricted to this scenario and are applicable to other wireless systems as well. Although the solutions in this document have been described for uplink operation, the methods and procedures may also applie to downlink operation. Although SIFS is used to indicate various inter frame spacing in the examples of the designs and procedures, all other inter frame spacing such as Reduced Interframe Space (RIFS) or other agreed time interval could be applied in the same solutions.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Various numbered embodiments are provided below.

Embodiments

Embodiment 1 provides a method for use on a wireless transmit receive unit (WTRU), the method comprising: receiving a first message from an access point (AP) that comprises a beamformee capability element; sending a second message to the AP that comprises a beamformer capability element; and receiving, from the AP, a third message in response to the second message that indicates a group to which the WTRU is assigned, wherein the group is based on the beamformer capability element and the group indicates up link (UL) transmission information to be used by the WTRU for UL transmissions.

Embodiment 2 is the method of embodiment 1, wherein the beamformee capability element indicates at least one of the following: element identification (ID), length, option, required information, beamforming (BF) specification, transmit power, time of departure (TOD) timestamp, TOD clock rate, optional information, spatial correlation, transmit power, a quality of service (QoS) requirements, and mobility associated with the WTRU.

Embodiment 3 is the method of embodiments 1 or 2, wherein the beamformer capability element indicates at least one of the following: element identification (ID), length, option, transmit power, timing feedback, time of departure (TOD) timestamp, TOD clock rate, compressed beamforming feedback, and optional information, and wherein the beamformer capability element is part of a very high throughput (VHT) capabilities information field.

Embodiment 4 is the method of embodiments 1, 2 or 3 wherein the WTRU is at least one of an IEEE 802.11, 802.16, or 802.1x station (STA).

Embodiment 5 is the method of embodiments 1, 2, 3 or 4 further comprising sending at least one message according to the UL transmission information of the group the WTRU is assigned.

Embodiment 6 is a method for use on an access point (AP), the method comprising sending a first message to one or more wireless transmit receive units (WTRUs) that comprises a beamformee capability element that indicates the AP is capable of very high throughput (VHT); receiving one or more second messages from the one or more WTRUs, wherein the one or more second messages each comprise a beamformer capability element; determining a group for each of the one or more WTRUs based at least partially on the beamformer capability element; and sending at least one third message that indicates the group to which each of the one or more WTRUs is assigned, wherein the group is based on the beamformer capability element and the group indicates up line (UL) transmission information to be used by the WTRU for UL transmissions.

Embodiment 7 is the method of embodiment 6, wherein the beamformee capability element indicates at least one of the following: element identification (ID), length, option, required information, beamforming (BF) specification, transmit power, time of departure (TOD) timestamp, TOD clock rate, optional information, spatial correlation, transmit power, a quality of service (QoS) requirements, and mobility associated with the WTRU.

Embodiment 8 is the method of embodiments 6 or 7, wherein the beamformer capability element indicates at least one of the following: element identification (ID), length, option, transmit power, timing feedback, time of departure (TOD) timestamp, TOD clock rate, compressed beamforming feedback, and optional information, and wherein the beamformer capability element is part of a VHT capabilities information field.

Embodiment 9 is the method of embodiments 6, 7, or 8 wherein the AP is at least one of an IEEE 802.11, 802.16, or 802.1x AP.

Embodiment 10 is the method of embodiments 6, 7 8, or 9 further comprising receiving at least one fourth message, wherein the at least one fourth message was sent according to the UL transmission information sent in the third message.

Embodiment 11 is a wireless transmit receive unit (WTRU) comprising a receiver configured to receive a first message from an access point (AP) that comprises a beamformee capability element; a transmitter configured to send a second message to the AP that comprises a beamformer capability element; and the receiver configured to receive, from the AP, a third message in response to the second message that indicates a group to which the WTRU is assigned, wherein the group is based on the beamformer capability element and the group indicates up link (UL) transmission information to be used by the WTRU for UL transmissions.

Embodiment 12 is a WTRU of embodiment 11, wherein the beamformee capability element indicates at least one of the following: element identification (ID), length, option, required information, beamforming (BF) specification, transmit power, time of departure (TOD) timestamp, TOD clock rate, optional information, spatial correlation, transmit power, a quality of service (QoS) requirements, and mobility associated with the WTRU.

Embodiment 13 is a WTRU of embodiments 11 or 12 wherein the beamformer capability element indicates at least one of the following: element identification (ID), length, option, transmit power, timing feedback, time of departure (TOD) timestamp, TOD clock rate, compressed beamforming feedback, and optional information, and wherein the beamformer capability element is part of a very high throughput (VHT) capabilities information field.

Embodiment 14 is a WTRU of embodiments 11, 12 or 13 configured as at least one of an IEEE 802.11, 802.16, or 802.1x station (STA).

Embodiment 15 is a WTRU of embodiments 11, 12, 13 or 14 wherein the transmitter is configured to send at least one message according to the UL transmission information of the group the WTRU is assigned.

Embodiment 16 is an access point (AP) comprising: a transmitter configured to send a first message to one or more wireless transmit receive units (WTRUs) that comprises a beamformee capability element that indicates the AP is capable of very high throughput (VHT); a receiver configured to receive one or more second messages from the one or more WTRUs, wherein the one or more second messages each comprise a beamformer capability element; a processor configured to determine a group for each of the one or more WTRUs based at least partially on the beamformer capability element; and the transmitter configured to send at least one third message that indicates the group to which each of the one or more WTRUs is assigned, wherein the group is based on the beamformer capability element and the group indicates up line (UL) transmission information to be used by the WTRU for UL transmissions.

Embodiment 17 is an AP of embodiment 16, wherein the beamformee capability element indicates at least one of the following: element identification (ID), length, option, required information, beamforming (BF) specification, transmit power, time of departure (TOD) timestamp, TOD clock rate, optional information, spatial correlation, transmit power, a quality of service (QoS) requirements, and mobility associated with the WTRU.

Embodiment 18 is an AP of embodiments 16 or 17, wherein the beamformer capability element indicates at least one of the following: element identification (ID), length, option, transmit power, timing feedback, time of departure (TOD) timestamp, TOD clock rate, compressed beamforming feedback, and optional information, and wherein the beamformer capability element is part of a VHT capabilities information field.

Embodiment 19 is an AP of embodiments 16, 17 or 18 configured as at least one of an IEEE 802.11, 802.16, or 802.1x AP.

Embodiment 20 is an AP of embodiments 16, 17, 18 or 19 wherein the receiver is configured to receive at least one fourth message, wherein the at least one fourth message was sent according to the UL transmission information sent in the third message.

Embodiment 21 is a method for use on a wireless transmit receive unit (WTRU), the method comprising sending to an access point (AP) a first message with a low overhead preamble for up link (UP) multiple user (MU) multiple input (MI) multiple output (MO), UL MU-MIMO.

Embodiment 22 is a method of embodiment 21, wherein the low overhead preamble comprises at least one of a shortened short training field (STF) and long training field (LTF).

Embodiment 23 is a method of embodiments 21 or 22, wherein the low overhead preamble comprises a shortened signal (SIG) field, wherein at least some information that is common to the WTRU and other WTRUs participating in UL MU-MIMO is not included in the shortened SIG field.

Embodiment 24 is a method of embodiments 21, 22 or 23, wherein the low overhead preamble does not include a signal (SIG) field.

Embodiment 25 is a method of embodiments 21, 22, 23 or 24, wherein the low overhead preamble is a mixed mode preamble that includes information that enables a non-UL MU-MIMO WTRU to decode the first message and set a network allocation vector (NAV) of the non-UL MU-MIMO WTRU.

Embodiment 26 is a method of embodiments 21, 22, 23, 24 or 25, wherein the first message is a physical layer convergence protocol (PLCP) protocol data unit (PPDU).

Embodiment 27 is a method of embodiments 21, 22, 23, 24, 25 or 26, wherein the low overhead preamble comprises a number of long training fields (LTF) that act as a spreading code for the AP to distinguish the WTRU from other WTRUs participating in simultaneous transmissions in UL MU-MIMO.

Embodiment 28 is a method of embodiment 27, wherein the LTFs are sequences with a zero autocorrelation property.

Embodiment 29 is a method of embodiments 21, 22, 23, 24, 25, 26, 27 or 28, wherein the first message is sent using space-frequency block coding over adjacent subcarriers.

Embodiment 30 is a WTRU configured to perform the method of embodiments 21, 22, 23, 24, 25, 26, 27, 28 or 29.

Embodiment 31 is a method for use on an access point (AP), the method comprising receiving from a station (STA) a first message with a low overhead preamble for up link (UP) multiple user (MU) multiple input (MI) multiple output (MO), UL MU-MIMO.

Embodiment 32 is an AP configured to perform the method of embodiment 31.

ITEMIZED LIST OF EMBODIMENTS

Item 1. A method for use on a wireless transmit receive unit (WTRU), the method comprising:

receiving a first message from an access point (AP) that comprises a beamformee capability element;

sending a second message to the AP that comprises a beamformer capability element; and

receiving, from the AP, a third message in response to the second message that indicates a group to which the WTRU is assigned, wherein the group is based on the beamformer capability element and the group indicates uplink (UL) transmission information to be used by the WTRU for UL transmissions.

Item 2. The method of item 1, wherein the beamformee capability element indicates at least one of the following: element identification (ID), length, option, required information, beamforming (BF) specification, transmit power, time of departure (TOD) timestamp, TOD clock rate, optional information, spatial correlation, transmit power, a quality of service (QoS) requirements, and mobility associated with the WTRU.

Item 3. The method of any of items 1 or 2, wherein the beamformer capability element indicates at least one of the following: element identification (ID), length, option, transmit power, timing feedback, time of departure (TOD) timestamp, TOD clock rate, compressed beamforming feedback, and optional information, and wherein the beamformer capability element is part of a very high throughput (VHT) capabilities information field.

Item 4. The method of any of items 1-3, wherein the WTRU is at least one of an IEEE 802.11, 802.16, or 802.lx STA.

Item 5. The method of any of items 1-4, further comprising:

sending at least one message according to the UL transmission information of the group the WTRU is assigned.

Item 6. A WTRU configured to perform the method of any of items 1-5.

Item 7. A method for use on an access point (AP), the method comprising:

sending a first message to one or more wireless transmit receive units (WTRUs) that comprises a beamformee capability element that indicates the AP is capable of very high throughput (VHT);

receiving one or more second messages from the one or more WTRUs, wherein the one or more second messages each comprise a beamformer capability element;

determining a group for each of the one or more WTRUs based at least partially on the beamformer capability element; and

sending at least one third message that indicates the group to which each of the one or more WTRUs is assigned, wherein the group is based on the beamformer capability element and the group indicates uplink (UL) transmission information to be used by the WTRU for UL transmissions.

Item 8. The method of item 7, wherein the beamformee capability element indicates at least one of the following: element identification (ID), length, option, required information, beamforming (BF) specification, transmit power, time of departure (TOD) timestamp, TOD clock rate, optional information, spatial correlation, transmit power, a quality of service (QoS) requirements, and mobility associated with the WTRU.

Item 9. The method of any of items 7-8, wherein the beamformer capability element indicates at least one of the following: element identification (ID), length, option, transmit power, timing feedback, time of departure (TOD) timestamp, TOD clock rate, compressed beamforming feedback, and optional information, and wherein the beamformer capability element is part of a VHT capabilities information field.

Item 10. The method of any of items 7-9, wherein the AP is at least one of an IEEE 802.11 AP, 802.16 AP, 802.lx AP, or an AP for another type of wireless network.

Item 11. The method of any of items 7-10, further comprising: receiving at least one fourth message, wherein the at least one fourth message was sent according to the UL transmission information sent in the third message.

Item 12. An AP configured to perform the method of any of items 7-11.

Item 13. A method for use on a wireless transmit and receive unit (WTRU), the method comprising: sending to an access point (AP) a first message with a low overhead preamble for uplink (UL) multiple user (MU) multiple input (MI) multiple output (MO), UL MU-MIMO.

Item 14. The method of item 13, wherein the low overhead preamble comprises at least one of a shortened short training field (STF) and long training field (LTF).

Item 15. The method of any of items 13 or 14, wherein the low overhead preamble comprises a shortened signal (SIG) field, wherein at least some information that is common to the WTRU and other WTRUs participating in UL MU-MIMO is not included in the shortened SIG field.

Item 16. The method of any of items 13-15, wherein the low overhead preamble does not include a signal (SIG) field.

Item 17. The method of any of items 13-16, wherein the low overhead preamble is a mixed mode preamble that includes information that enables a non-UL MU-MIMO STA to decode the first message and set a network allocation vector (NAV) of the non-UL MU-MIMO STA.

Item 18. The method of any of items 13-17, wherein the first message is a physical layer convergence protocol (PLCP) protocol data unit (PPDU).

Item 19. The method of any of items 13-18, wherein the low overhead preamble comprises a number of long training fields (LTF) that act as a spreading code for the AP to distinguish the WTRU from other WTRUs participating in simultaneous transmissions in UL MU-MIMO.

Item 20. The method of any of items 13-19, wherein the LTFs are sequences with a zero autocorrelation property.

Item 21. The method of any of items 13-20, wherein the first message is sent using space-frequency block coding over adjacent subcarriers.

Item 22. A WTRU configured to perform the method of any of items 13-21.

Item 23. A method for use on an access point (AP), the method comprising: receiving from a wireless transmit and receive unit (WTRU) a first message with a low overhead preamble for uplink (UL) multiple user (MU) multiple input (MI) multiple output (MO), UL MU-MIMO.

Item 24. An AP configured to perform the method of item 23.

## Claims

1. A method implemented in a wireless access point (AP), the method comprising:

   receiving, via a multiple user-multiple input multiple output (MU-MIMO) channel, a first LTF sequence from a first wireless transmit/receive unit (WTRU) and a second LTF sequence from a second WTRU, wherein the first WTRU and the second WTRU are capable of MU-MIMO operation, the first LTF sequence comprises a first plurality of LTF symbols corresponding to a first row of entries of a matrix, and the second LTF sequence comprises a second plurality of LTF symbols corresponding to a second row of entries of the matrix; and

estimating the MU-MIMO channel based on the first LTF sequence and the second LTF sequence.

2. The method of claim 1, wherein the first WTRU and the second WTRU belong to a group of N WTRUs and the matrix is a N by N matrix.

3. The method of claim 2, wherein the first LTF sequence includes a first set of N LTF symbols and the second LTF sequence includes a second set of N LTF symbols.

4. The method of claim 1, further comprising receiving N space time streams from a group of WTRUs that includes the first WTRU and the second WTRU, wherein the first LTF sequence includes a first set of N LTF symbols and the second LTF sequence includes a second set of N LTF symbols.

5. The method of claim 1, wherein the first and second pluralities of LTF symbols comprise orthogonal frequency division multiplexing (OFDM) symbols.

6. The method of claim 1, further comprising performing a frequency offset estimation based on the first and second LTF sequences.

7. The method of claim 1, further comprising performing a timing estimation based on the first and second LTF sequences.

8. A wireless access point (AP) comprising:

a processor; and
a memory storing processor-executable instructions that, when executed by the processor, cause the AP to:

receive, via a multiple user-multiple input multiple output (MU-MIMO) channel, a first LTF sequence from a first wireless transmit/receive unit (WTRU) and a second LTF sequence from a second WTRU, wherein the first WTRU and the second WTRU are capable of MU-MIMO operation, the first LTF sequence comprises a first plurality of LTF symbols corresponding to a first row of entries of a matrix, and the second LTF sequence comprises a second plurality of LTF symbols corresponding to a second row of entries of the matrix; and
estimate the MU-MIMO channel based on the first LTF sequence and the second LTF sequence.

9. The AP of claim 8, wherein the first WTRU and the second WTRU belong to a group of N WTRUs and the matrix is a N by N matrix.

10. The AP of claim 9, wherein the first LTF sequence includes a first set of N LTF symbols and the second LTF sequence includes a second set of N LTF symbols.

11. The AP of claim 8, wherein the processor-executable instructions, when executed by the processor, further cause the AP to receive N space time streams from a group of WTRUs that includes the first WTRU and the second WTRU, and wherein the first LTF sequence includes a first set of N LTF symbols and the second LTF sequence includes a second set of N LTF symbols.

12. The AP of claim 8, wherein the first and second pluralities of LTF symbols comprise orthogonal frequency division multiplexing (OFDM) symbols.

13. The AP of claim 8, wherein the processor-executable instructions, when executed by the processor, further cause the AP to perform a frequency offset estimation based on the first and second LTF sequences.

14. The AP of claim 8, wherein the processor-executable instructions, when executed by the processor, further cause the AP to perform a timing estimation based on the first and second LTF sequences.

15. The AP of claim 8, wherein the matrix includes a sequence of +1 and -1.

FIG. 1A

EP 3 367 586 A1

FIG. 1B

FIG. 1C

FIG. 2

EP 3 367 586 A1

FIG. 3

| STF 302 | LTF 304 | SIG 306 | DATA 308 |

300

FIG. 4

| STF 402 | LTF 404 | SIG 406 | LTF2 408 | ... | LTF_N(LTF) 410 | DATA 412 |

400

FIG. 5

| STF 502 | LTF 504 | SIGA 506 | STF2 508 | LTF2 510 | ... | LTF_N(LTF) 512 | SIGB 514 | DATA 516 |

500

FIG. 6A

600

| STF 602 | LTF 604 | LTF 606 | SIG 608 | LTF 610 | DATA 612 |

FIG. 6B

650

| STF 652 | LTF 654 | LTF 656 | SIG 658 | LTF 660 | DATA 662 |

Time

Time

| $S_1$ | $S_1$ |
|-------|-------|
| $S_2$ | $S_2$ |
| $S_3$ | $S_3$ |
| $S_4$ | $S_4$ |
| ... | ... |
| $S_{M-1}$ | $S_{M-1}$ |
| $S_M$ | $S_M$ |

Frequency

WTRU 102d

| $-S_2^*$ | $-S_2^*$ |
|----------|----------|
| $S_1^*$ | $S_1^*$ |
| $-S_4^*$ | $-S_4^*$ |
| $S_3^*$ | $S_3^*$ |
| ... | ... |
| $-S_M^*$ | $-S_M^*$ |
| $S_{M-1}^*$ | $S_{M-1}^*$ |

Frequency

WTRU 102e

# FIG. 7A

Time

Time

| $S_1$ | $S_1$ |
|-------|-------|
| | |
| $S_3$ | $S_3$ |
| | |
| ... | ... |
| | |
| $S_{M-1}$ | $S_{M-1}$ |

Frequency

WTRU 102d

| | |
|-------|-------|
| $S_2$ | $S_2$ |
| | |
| $S_4$ | $S_4$ |
| | |
| ... | ... |
| | |
| | |
| $S_M$ | $S_M$ |

Frequency

WTRU 102e

# FIG. 7B

Time

| $S_1$ | $S_2$ |
|---|---|
| $S_3$ | $S_4$ |
| $S_5$ | $S_6$ |
| $S_7$ | $S_8$ |
| | |
| $\cdots$ | $\cdots$ |
| | |
| | |
| $S_{2M-3}$ | $S_{2M-2}$ |
| $S_{2M-1}$ | $S_{2M}$ |

Frequency

WTRU 102d

Time

| $-S_2^*$ | $-S_1^*$ |
|---|---|
| $S_4^*$ | $S_3^*$ |
| $-S_6^*$ | $-S_5^*$ |
| $S_8^*$ | $S_7^*$ |
| | |
| $\cdots$ | $\cdots$ |
| | |
| | |
| $-S_{2M-2}^*$ | $-S_{2M-3}^*$ |
| $S_{2M}^*$ | $S_{2M-1}^*$ |

Frequency

WTRU 102e

FIG. 8

900

| MU DL Beamformer Capable B19 | MU DL Beamformee Capable B20 | . . . | MU DL Beamformer Capable B30 | MU DL Beamformee Capable B31 |
|---|---|---|---|---|

## FIG. 9

1000

| Element ID 1002 | Length 1004 | Option 1006 | Required Action and Info 1008 | BF Spec 1010 | Transmit Power 1012 | TOD Timestamp 1014 | TOD Clock Rate 1016 | Optional Info 1018 |
|---|---|---|---|---|---|---|---|---|

## FIG. 10A

1050

| Element ID 1052 | Length 1054 | Option 1056 | Transmit Power 1058 | Timing Feedback 1060 | TOD Timestamp 1062 | TOD Clock Rate 1064 | Compr. BF Feedback 1066 | Optional Info 1068 |
|---|---|---|---|---|---|---|---|---|

# FIG. 10B

AP
170

WTRU
102d

WTRU
102e

WTRU
102f

1102

1104

1106

1108

1110

1112

1114

1116

1118

# FIG. 11

Information
1202

AP 170

Initial Groups
1206

# FIG. 12

1300

| Element ID 1302 | Length 1304 | Number of Memberships 1306 | Membership 1 Info Field 1308 | • • • | Membership N Info Field 1310 |
|---|---|---|---|---|---|

**FIG. 13A**

1350

| Group ID 1352 | Type 1354 | Order 1356 | Option 1358 | TX Power 1360 | TOD Offset 1362 | Delay 1364 | Channel Width 1366 | SBL 1368 | MCS 1370 |
|---|---|---|---|---|---|---|---|---|---|

| Compr. Steering Matrix 1372 | Monitor 1374 | Monitor Freq 1376 | Refresh Freq 1378 |
|---|---|---|---|

**FIG. 13B**

1400

| Element ID 1402 | Length 1404 | Number of Groups 1406 | Group 1 Info Field 1408 | ... | Group N Info Field 1410 |

**FIG. 14**

1500

| Group ID 1502 | Type 1504 | Number of Members 1506 | Member 1 Info Field 1508 | ... | Member N Info Field 1510 |

**FIG. 15**

1600

| Member ID 1602 | Option 1604 | TX Power 1606 | TOD Offset 1608 | Delay 1610 | Channel Width 1612 | MCS 1614 | Compr. Steering Matrix 1616 | Monitor 1618 | Monitor Freq 1620 | Refresh Freq 1622 |

**FIG. 16**

1700

```
Collect WTRU
Information
1702
```

↓

```
Divide the WTRUs Into
Groups
1704
```

↓

```
Notify the WTRU of the
Groups
1706
```

↓

```
Monitor the Groups
1708
```

# FIG. 17

FIG. 18

FIG. 19

EP 3 367 586 A1

FIG. 20

EP 3 367 586 A1

FIG. 21

2100

Preamble

AP 170

WTRU 102d

WTRU 102e

WTRU 102f

2102 — Data | Pad | Data | Pad | Data

2012 — B A R
2014 — B A R
2104

2016 — BA
2018 — BA
2020 — BA

2106 — UMM

2108 — Data | Pad | Data | Pad | Data

2110 — ACK — 2022

TXOP

FIG. 22

Beamformee
2302

Beamformer
2304

2306

2308

2310

2312

2300

# FIG. 23

FIG. 24

Spatial

Frequency

WTRU 102d

WTRU 102e

2502

Spatial

Frequency

WTRU 102d

WTRU 102f

WTRU 102e

2504

# FIG. 25

Europäisches
Patentamt

European
Patent Office

Office européen
des brevets

# EUROPEAN SEARCH REPORT

Application Number

EP 18 16 6244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/026928 A1 (GONG MICHELLE X [US] ET AL) 2 February 2012 (2012-02-02)<br>* paragraph [0001] - paragraph [0002] *<br>* paragraph [0016] - paragraph [0017] *<br>* figure 3 *<br>----- | 1-15 | INV.<br>H04B7/0452<br><br>ADD.<br>H04B7/06<br>H04B17/12 |
| X | WO 2011/108832 A2 (LG ELECTRONICS INC [KR]; KANG BYEONG WOO [KR]; NOH YU JIN [KR]; LEE DA)<br>9 September 2011 (2011-09-09)<br>* abstract *<br>-& US 2012/327915 A1 (KANG BYEONG WOO [KR] ET AL) 27 December 2012 (2012-12-27)<br>* paragraph [0008] - paragraph [0012] *<br>* paragraph [0052] - paragraph [0055]; figure 2 *<br>* paragraph [0065] - paragraph [0080]; figures 3,4 *<br>* paragraph [0104] *<br>* claim 1 *<br>----- | 1-15 | H04W52/36<br>H04W52/14<br>H04B7/0404<br>H04W56/00 |
| X | WO 2011/031058 A2 (LG ELECTRONICS INC [KR]; LEE DAE WON [KR]; ROH DONG WOOK [KR]; KANG BY) 17 March 2011 (2011-03-17)<br>* paragraph [0045] - paragraph [0058]; figure 2 *<br>* paragraph [0092] - paragraph [0093] *<br>* paragraph [0210] - paragraph [0216]; figures 30,31 *<br>----- | 1-15 | TECHNICAL FIELDS SEARCHED (IPC)<br><br>H04B<br>H04W<br>H04L |

The present search report has been drawn up for all claims

| Place of search | Date of completion of the search | Examiner |
|---|---|---|
| Munich | 20 June 2018 | Sieben, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 16 6244

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2018

| Patent document cited in search report | | Publication date | Patent family member(s) | | Publication date |
|---|---|---|---|---|---|
| US 2012026928 | A1 | 02-02-2012 | CN | 103004105 A | 27-03-2013 |
| | | | EP | 2599239 A2 | 05-06-2013 |
| | | | EP | 3327946 A1 | 30-05-2018 |
| | | | US | 2012026928 A1 | 02-02-2012 |
| | | | WO | 2012015609 A2 | 02-02-2012 |
| WO 2011108832 | A2 | 09-09-2011 | US | 2012327915 A1 | 27-12-2012 |
| | | | WO | 2011108832 A2 | 09-09-2011 |
| US 2012327915 | A1 | 27-12-2012 | US | 2012327915 A1 | 27-12-2012 |
| | | | WO | 2011108832 A2 | 09-09-2011 |
| WO 2011031058 | A2 | 17-03-2011 | AU | 2010293217 A1 | 15-03-2012 |
| | | | CA | 2771605 A1 | 17-03-2011 |
| | | | CN | 102484522 A | 30-05-2012 |
| | | | CN | 104378149 A | 25-02-2015 |
| | | | EP | 2476212 A2 | 18-07-2012 |
| | | | EP | 3116142 A1 | 11-01-2017 |
| | | | ES | 2620230 T3 | 28-06-2017 |
| | | | HU | E032733 T2 | 30-10-2017 |
| | | | JP | 5529969 B2 | 25-06-2014 |
| | | | JP | 2013504248 A | 04-02-2013 |
| | | | KR | 20110027533 A | 16-03-2011 |
| | | | KR | 20120055622 A | 31-05-2012 |
| | | | PL | 2476212 T3 | 31-07-2017 |
| | | | RU | 2012106892 A | 20-10-2013 |
| | | | US | 2012127940 A1 | 24-05-2012 |
| | | | US | 2014140311 A1 | 22-05-2014 |
| | | | WO | 2011031058 A2 | 17-03-2011 |

EPO FORM P0459

For more details about this annex : see Official Journal of the European Patent Office, No. 12/82

**EP 3 367 586 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61644872 A